(19) Europäisches Patentamt
European Patent Office
Office européen des brevets

(11) **EP 3 899 231 B1**

(12) **EUROPÄISCHE PATENTSCHRIFT**

(45) Veröffentlichungstag und Bekanntmachung des Hinweises auf die Patenterteilung:
**13.11.2024   Patentblatt 2024/46**

(21) Anmeldenummer: **18829716.2**

(22) Anmeldetag: **20.12.2018**

(51) Internationale Patentklassifikation (IPC):
*F02D 41/14* (2006.01)      *F02D 41/00* (2006.01)
*F01N 3/20* (2006.01)       *F02P 5/15* (2006.01)
*F01N 3/10* (2006.01)       *F01N 13/00* (2010.01)
*F01N 9/00* (2006.01)       *F02D 41/06* (2006.01)
*F02D 29/06* (2006.01)

(52) Gemeinsame Patentklassifikation (CPC):
**F02D 41/1461; F01N 3/208; F02D 41/0007;**
**F02D 41/1463; F02P 5/1502;** F01N 3/103;
F01N 9/00; F01N 13/009; F01N 2240/04;
F01N 2560/026; F01N 2560/06; F01N 2560/14;
F01N 2570/14; F01N 2590/10; F01N 2610/02;

(Forts.)

(86) Internationale Anmeldenummer:
**PCT/AT2018/060312**

(87) Internationale Veröffentlichungsnummer:
**WO 2020/124101 (25.06.2020 Gazette 2020/26)**

(54) **BRENNKRAFTMASCHINE MIT ABGASNACHBEHANDLUNG UND STEUERUNG DER STICKOXIDEMISSION**

INTERNAL COMBUSTION ENGINE WITH EXHAUST GAS AFTERTREATMENT AND CONTROL OF THE NITROGEN OXIDE EMISSIONS

MOTEUR À COMBUSTION INTERNE AVEC POST-TRAITEMENT DES GAZ D'ÉCHAPPEMENT ET COMMANDE DES ÉMISSIONS D'OXYDE D'AZOTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.10.2021   Patentblatt 2021/43**

(73) Patentinhaber: **Innio Jenbacher GmbH & Co OG 6200 Jenbach (AT)**

(72) Erfinder:
• **URL, Michael**
  **85375 Neufahrn (DE)**
• **ARNOLD, Georg**
  **6020 Innsbruck (AT)**
• **KOPECEK, Herbert**
  **6130 Schwaz (AT)**
• **SPYRA, Nikolaus**
  **6020 Innsbruck (AT)**

(74) Vertreter: **Torggler & Hofmann Patentanwälte - Innsbruck**
**Torggler & Hofmann Patentanwälte GmbH & Co KG**
**Postfach 85**
**6020 Innsbruck (AT)**

(56) Entgegenhaltungen:
WO-A1-2013/139848       CN-A- 107 914 860
DE-A1- 102008 008 618   DE-A1- 19 926 146
FR-A1- 3 062 162        JP-A- 2013 047 474

(52) Gemeinsame Patentklassifikation (CPC): (Forts.)
F01N 2900/0422; F01N 2900/08; F01N 2900/1402;
F01N 2900/1602; F01N 2900/1621; F02D 29/06;
F02D 41/0027; F02D 41/062; F02D 2200/08;
F02D 2200/10; F02D 2250/36; Y02A 50/20;
Y02T 10/12

**Beschreibung**

Die Erfindung betrifft eine Brennkraftmaschine mit den Merkmalen des Oberbegriffs des Anspruchs 1 und ein Genset mit einer solchen Brennkraftmaschine.

Im Betrieb einer gattungsgemäßen Brennkraftmaschine kommt es durch die Verbrennungsprozesse in den Kolben-Zylinder-Einheiten zur Entstehung von Abgasen, welche insbesondere $NO_x$- und Kohlenwasserstoffanteile aufweisen. Zur Behandlung dieser Abgase ist eine Abgasnachbehandlungsvorrichtung vorgesehen. Die Einhaltung der Emissionsgrenzwerte wird im thermisch stationären Betrieb der Brennkraftmaschine in Bezug auf den $NO_x$-Anteil durch das Vorsehen eines SCR-Katalysators ("Selective-Catalytic-Reduction"-Katalysator), in welchem ein Reduktionsmittel (meist Harnstoff) umgesetzt wird, ermöglicht. Oft ist zusätzlich ein Oxidationskatalysator vorgesehen, welcher in Bezug auf eine Strömungsrichtung der Abgase dem SCR-Katalysator vor- oder nachgeschaltet ist. Zusätzlich oder alternativ kann ein dem SCR-Katalysator nachgeschalteter und/oder vorgeschalteter Ammoniak-Schlupf-Katalysator (ASC) vorgesehen sein. In Bezug auf die Anordnung der verschiedenen Katalysatoren sind z. B. folgende Möglichkeiten gegeben:

- SCR-Katalysator -> ASC
- ASC -> ASC -> Oxidationskatalysator
- Oxidationskatalysator -> SCR-Katalysator -> ASC
- Oxidationskatalysator -> SCR-Katalysator -> ASC -> Oxidationskatalysator Die einzelnen Katalysatoren können baulich getrennt voneinander oder baulich kombiniert vorliegen.

Es hat sich im Stand der Technik als schwierig heraus gestellt, die Emissionsgrenzwerte auch in einem transienten Betriebsverhalten der Brennkraftmaschine (das ist ein Betriebsverhalten, in welchem sich die Drehzahl einer durch die Kolben-Zylinder-Einheiten angetriebenen Kurbelwelle und/oder die mechanische Leistung der Brennkraftmaschine ändert, z. B. das Betriebsverhalten unmittelbar nach Start der Brennkraftmaschine) einzuhalten. Dies gilt insbesondere für den sogenannten $NO_x$-Durchschnittswert des $NO_x$-Anteils der Abgase an der Austrittstelle des SCR-Katalysators, sowohl bei einem Warmstart als auch bei einem Kaltstart der Brennkraftmaschine. Hier ist es schwierig diesen $NO_x$-Durchschnittswert kleiner als einem gesetzlich vorgegebenen Zielwert zu halten, ohne eine Startzeit der Brennkraftmaschine zu verlängern und/oder die HC- oder $CO_2$-Emissionen unnötig zu erhöhen.

Die Erfordernisse eines schnellen Startens der Brennkraftmaschine (d. h. möglichst kurze Startzeit) einerseits und der Einhaltung des Zielwertes für den $NO_x$-Durchschnittswert andererseits stehen in einem Spannungsfeld. Dynamisches Anfetten, d. h. Absenken der Luftüberschusszahl des für die Verbrennung zur Verfügung stehenden Luft-Brennstoff-Gemisches (eine Luftüberschusszahl $\lambda = 1$ entspricht einem stöchiometrischen Verhältnis von Luft zu Brennstoff, eine Luftüberschusszahl $\lambda > 1$ entspricht einem Luft-Brennstoff-Gemisch mit einem Luftanteil größer als dem stöchiometrischen Verhältnis), des in den Kolben-Zylinder-Einheiten zu verbrennenden Luft-Brennstoff-Gemisches während des Hochfahrens der Drehzahl und der Leistung der Brennkraftmaschine (und damit eine Verkürzung der Startzeit) führt zu einer Zunahme des in den Verbrennungsprozessen entstehenden $NO_x$-Anteils der Abgase in einer Abgassammelleitung der Brennkraftmaschine. Da der SCR-Katalysator, welchem die Abgase über die Abgassammelleitung zugeführt werden, bei einem Kaltstart der Brennkraftmaschine noch kalt ist, reicht die $NO_x$-Konversionsrate des katalytischen Materials des SCR-Katalysators nicht aus, um einen erhöhten $NO_x$-Anteil an der Austrittstelle des SCR-Katalysator reduzieren zu können.

Reagiert die Katalysatorregeleinrichtung des SCR-Katalysators zu träge auf die sich ändernden Anforderungen im transienten Betriebsverhalten, kann es zu falschen Mengen an dem SCR-Katalysator bereitgestellten Reduktionsmittel kommen. Dies kann zu kritischen transienten Effekten führen, bei welchen entweder das in den SCR-Katalysator eintretende $NO_x$ aufgrund eines Mangels an bereitgestelltem Reduktionsmittel nicht ausreichend reduziert wird (sodass an der Austrittstelle des SCR-Katalysator zu viel $NO_x$-Anteil vorliegt) oder - im Falle einer Überdosierung des Reduktionsmittels - kann aus dem Reduktionsmittel entstehendes $NH_3$ in einen nachgeschalteten Oxidationskatalysator gelangen und so den $NO_x$-Anteil des Abgases zusätzlich erhöhen. Diese kritischen transienten Effekte können auch durch ein träges thermisches Verhalten des SCR-Katalysators auftreten.

Regelkreise zum Steuern der Abgasnachbehandlungsvorrichtung nach dem Stand der Technik haben sich als nicht verlässlich genug herausgestellt, um einen gewünschten Zielwert des $NO_x$-Anteil des Abgases an der Austrittstelle des SCR-Katalysator einzuhalten, vor allem dann, wenn Störfaktoren wie eine sich ändernde Feuchtigkeit der Umgebungsluft der Brennkraftmaschine auftreten oder die Komponenten (insbesondere des SCR-Katalysators) der Brennkraftmaschine altern.

Die Patentanmeldung FR 3 062 162 A1 zeigt die Präambel des unabhängigen Anspruchs 1.

Aufgabe der Erfindung ist die Bereitstellung einer gattungsgemäßen Brennkraftmaschine, bei welcher die Einhaltung eines vorgegebenen oder vorgebbaren Zielwerts für den Durchschnittswert des $NO_x$-Anteils der im Betrieb der Brennkraftmaschine entstehenden Abgase in einem transienten Betriebsverhalten der Brennkraftmaschine, insbesondere bei einem Kaltstart oder Warmstart der Brennkraftmaschine, ohne das Hinnehmen eines verzögerten Aufbaus der Drehzahl und/oder mechanischen Leistung der Brennkraftmaschine (oder elektrischen Leistung eines sich durch mechanische Kopplung der Brennkraftmaschine mit einem elektrischen Generator ergebenden Gensets) möglich ist und eines Gensets mit einer solchen Brennkraftmaschine. Bevorzugt soll es mit einer erfindungsgemäßen Brennkraftmaschine bzw. einem erfindungsgemäßen Genset mit einer solchen Brennkraftmaschine auch möglich sein

- den Durchschnittswert des $NO_x$-Anteils der im Betrieb der Brennkraftmaschine entstehenden Abgase bei Hinzutreten von Störfaktoren, wie einer sich ändernden Feuchtigkeit der Umgebungsluft, oder bei Alterung von Komponenten der Brennkraftmaschine (insbesondere des SCR-Katalysators) gleich einem vorgegebenen oder vorgebbaren Zielwert zu halten, und/oder
- zusätzlich vorgebbare Nebenbedingungen wie Verbrauch an Reduktionsmittel oder Gesamtbetriebsmittelaufwand zu berücksichtigen und/oder
- einen Gehalt an HC-Emissionen nicht zu erhöhen.

Diese Aufgabe wird durch eine Brennkraftmaschine mit den Merkmalen des Anspruchs 1 und ein Genset mit einer solchen Brennkraftmaschine gelöst. Vorteilhafte Ausführungsformen der Erfindung sind in den abhängigen Ansprüchen definiert.

Zur Lösung der Aufgabe ist vorgesehen, dass

- der Motorregeleinrichtung ein Zielwert für einen sich in Bezug auf eine vorgegebene Zeitspanne an einer Austrittstelle der Abgasnachbehandlungs-vorrichtung ergebenden $NO_x$-Durchschnittswert des $NO_x$-Anteils der Abgase vorgegeben ist (vorzugsweise durch den Hersteller der Brennkraftmaschine, ggf. aber auch durch einen Betreiber der Brennkraftmaschine)
- die Motorregeleinrichtung zumindest in einem Betriebsmodus dazu konfiguriert ist, laufend zumindest unter Berücksichtigung der seit Beginn der Zeitspanne bereits emittierter $NO_x$-Anteile und des vorgegebenen Zielwerts einen $NO_x$-Referenzwert für die Katalysatorregeleinrichtung zu berechnen, der so gewählt ist, dass sich am Ende der vorgegebenen Zeitspanne an der Austrittstelle der Abgasnachbehandlungsvorrichtung der vorgegebene Zielwert ergibt, und
- der berechnete $NO_x$-Referenzwert der Katalysatorregeleinrichtung als Sollwert zugeführt wird

Der $NO_x$-Anteil, der $NO_x$-Referenzwert, der Zielwert und der $NO_x$-Durchschnittswert können entweder in Form eines Massenstroms oder in Form einer Konzentration angegeben werden.

Die Austrittstelle der Abgasnachbehandlungsvorrichtung ist die Austrittstelle des zumindest einen SCR-Katalysators, falls stromab von diesem keine weitere Katalysatorvorrichtungen, insbesondere kein Oxidationskatalysator und/oder ein Ammoniak-Schlupf-Katalysator, angeordnet sind; ist dem zumindest einen SCR-Katalysator ein Oxidationskatalysator und/oder ein Ammoniak-Schlupf-Katalysator nachgeschaltet, ist die Austrittstelle des Oxidationskatalysators bzw. des Ammoniak-Schlupf-Katalysators die Austrittstelle der Abgasnachbehandlungsvorrichtung.

Es kann ausreichen, dass die Motorregeleinrichtung den erfindungsgemäßen Betriebsmodus nur dann aktiviert, wenn zu erwarten ist oder sich abzeichnet, dass der vorgebbare oder vorgegebene Zielwert ohne die erfindungsgemäße(n) Maßnahme(n) nicht erreicht werden kann.

Durch die Erfindung ist es möglich, vor allem während eines transienten Betriebsverhaltens (insbesondere während eines Kaltstarts oder Warmstarts) zeitweise höhere $NO_x$-Anteile des Abgases an der Austrittstelle der Abgasnachbehandlungsvorrichtung zuzulassen, da sichergestellt ist, dass insgesamt nach Ablauf der vorgebbaren oder vorgegebenen Zeitspanne der sich in Bezug auf die vorgebbare oder vorgegebene Zeitspanne an der Austrittstelle der Abgasnachbehandlungsvorrichtung ergebende $NO_x$-Durchschnittswert des $NO_x$-Anteils der Abgase gleich dem vorgebbaren oder vorgegebenen Zielwert ist.

Durch die Erfindung ist es möglich, eine vorgegebene oder vorgebbare Startzeit einzuhalten, ohne dass der Zielwert für den sich in Bezug auf die vorgebbare oder vorgegebene Zeitspanne ergebenden $NO_x$-Durchschnittswert überschritten wird. Die Startzeit ist jene Zeit, die vergeht, bis ausgehend von einem Start der Brennkraftmaschine (z. B. durch Betätigung eines Startknopfes) ein vorgegebener oder vorgebbarer Zielwert für die Drehzahl und/oder die mechanische Leistung der Brennkraftmaschine (oder für die elektrische Leistung eines sich durch mechanische Kopplung der Brennkraftmaschine mit einem elektrischen Generator ergebenden Gensets) erreicht wird.

Durch die Erfindung ist es möglich, einen Verbrauch an Reduktionsmittel durch die Abgasnachbehandlungsvorrichtung zu minimieren, weil man über längere Zeitspannen als im Stand der Technik näher am vorgebbaren oder vorgegebenen Zielwert für den $NO_x$-Durchschnittswert operieren kann und damit weniger Reduktionsmittel benötigt wird. In diesen Zeitspannen kann die Brennkraftmaschine mit höherem Wirkungsgrad betrieben werden als im Stand der Technik.

Bei der Erfindung weist der Regelkreis zum Regeln von Abgasen der Brennkraftmaschine also zumindest zwei logisch voneinander getrennt vorliegende Komponenten auf (die hardwareseitig in einer gemeinsamen elektronischen Regelvorrichtung oder in physisch voneinander getrennten elektronischen Regelvorrichtungen vorliegen können), nämlich einerseits die Motorregeleinrichtung und andererseits die Katalysatorregeleinrichtung.

Die Motorregeleinrichtung weist verschiedene Funktionen auf:

- sie beeinflusst mittels einer Motorsteuervorrichtung (welche gemäß dem Stand der Technik ausgeführt sein kann und daher hier nicht näher beschrieben werden muss) Aktuatoren des Motorblocks zur Beeinflussung des Zustandes des Motorblocks (insbesondere Beeinflussung des für die Verbrennungsvorgänge zur Verfügung stehenden Brennstoffes, als absolute Größe und/oder im Verhältnis zur Luft in den Zylindern des Motorblocks; Steuerung weiterer Komponenten des Motorblocks wie Verhalten eines ggf. vorhandenen Turboladers, eines Wastegates; Steuerung der Lage des Zündzeitpunkts in den Kolben-Zylinder-Einheiten; Ausschalten von Zündeinrichtungen für ausgewählte Kolben-Zylinder-Einheiten; usw.), insbesondere um ein gewünschtes Drehzahl- und/oder Leistungsverhalten der Brennkraftmaschine zu bewirken

- sie erhält Signale von dem Stand der Technik entsprechenden Sensoren, über welche die Motorregeleinrichtung Informationen über den Zustand des Motorblocks (insbesondere im Hinblick auf die oben beschriebenen Regelaufgaben) und optional den Zustand der Abgasnachbehandlungsvorrichtung erhalten oder bestimmen kann

- sie steuert oder (unter Berücksichtigung der von den Sensoren zur Verfügung gestellten Signalen) regelt die Katalysatorregeleinrichtung mittels Steuerbefehlen, durch Vorgabe eines gewünschten $NO_x$-Sollwerts im Abgas an einer Austrittstelle der Abgasnachbehandlungsvorrichtung (wie die Katalysatorregeleinrichtung ihrerseits die Abgasnachbehandlungsvorrichtung ansteuern muss, damit dieses Ziel erreicht wird, entspricht dem Stand der Technik) und steuert - falls erforderlich - den Motorblock so, dass die Katalysatorregeleinrichtung den vorgegebenen, gewünschten $NO_x$-Sollwert im Abgas an der Austrittstelle der Abgasnachbehandlungsvorrichtung möglichst nahe dem Zielwert zum Zeitpunkt des Endes der vorgebbaren oder vorgegebenen Zeitspanne erzielen kann

Die Katalysatorregeleinrichtung:

- erhält Steuerbefehle von der Motorregeleinrichtung, insbesondere den vorstehend diskutierten vorgegebenen, gewünschten $NO_x$-Sollwert im Abgas an der Austrittstelle der Abgasnachbehandlungsvorrichtung und setzt diese um, insbesondere durch Steuern einer Injektionsvorrichtung zum Injizieren von Reduktionsmittel (z. B. Harnstoff) in eine Abgassammelleitung vor einer katalytischen Zone des zumindest einen SCR-Katalysators

- optional: kann gemäß den Steuerbefehlen der Motorregeleinrichtung den Zustand des zumindest einen SCR-Katalysators mittels ggf. vorhandener Zusatzeinrichtungen (wie z. B. einer Heizvorrichtung zum Heizen der katalytischen Zone) beeinflussen Abgesehen von der Tatsache, dass die Katalysatorregeleinrichtung Steuerbefehle von der Motorregeleinrichtung erhält, kann sie gemäß dem Stand der Technik ausgebildet sein und muss daher hier nicht näher beschrieben werden.

Der zeitliche $NO_x$-Durchschnittswert $\overline{NO_x}$ des $NO_x$-Anteils der Abgase an der Austrittstelle des zumindest einen SCR-Katalysators ist in Bezug auf eine Zeitspanne $t_{av} = t_2 < t_1$ durch die nachstehende Gleichung definiert ($NO_x(t)$ ist dabei die zeitliche Rate des $NO_x$-Anteils zur Zeit t, also der $NO_x$-Massenstrom oder die $NO_x$-Konzentration):

$$\overline{NO_x} = \frac{1}{t_{av}} \int_{t_1}^{t_2} NO_x(t')dt'$$

Bevorzugt erfolgt die erfindungsgemäße Regelung wie folgt:

Der Motorregeleinrichtung ist ein Zielwert $\overline{NO_{x,Tar}}$ vorgebbar oder vorgegeben, welcher nach Ablauf der vorgebbaren oder vorgegebenen Zeitspanne $t_{av}$ erreicht sein muss (und generell nicht überschritten werden darf). Die Zeitspanne $t_{av}$ kann beispielsweise 30 Minuten betragen, es sind aber alternativ oder zusätzlich auch andere Zeitspannen $t_{av}$ denkbar, wie z. B. ein Stundenwert, ein Tageswert, usw. Es ist denkbar, dass die Zeitspanne $t_{av}$ nur einmal durchfahren werden muss und anschließend eine Regelung gemäß dem Stand der Technik betrieben werden kann. Es ist auch denkbar, dass die Zeitspanne $t_{av}$ gleitend zu betrachten ist (und z. B. immer in Bezug auf die zuletzt vergangenen 30 Minuten, 1 Stunde, 1 Tag, usw. gilt). Im Stand der Technik wurde dieser Zielwert $\overline{NO_{x,Tar}}$, zur Vermeidung einer Überschreitung verringert um einen Sicherheitsabstand, welcher der Katalysatorregeleinrichtung als konstanter $NO_x$-Sollwert vorgegeben wurde.

Die Zeitspanne $t_{av}$ kann:

- mit dem Start der Brennkraftmaschine zu laufen beginnen und/oder
- zu einem festgelegten Zeitpunkt nach einer Synchronisierung des Gensets mit einem Energieversorgungsnetz und/oder während der Leistungsrampe der Brennkraftmaschine und/oder während eines Hochfahrens der Drehzahl der Brennkraftmaschine und/oder
- nach Erreichen der Nennleistung der Brennkraftmaschine bei Vorliegen einer Laständerung zu laufen beginnen und vorzugsweise bis zu Abklingen der Laständerung andauern

Die Motorregeleinrichtung der erfindungsgemäßen Brennkraftmaschine berechnet kontinuierlich oder in Zeitschritten (im Folgenden kurz: "laufend") unter Berücksichtigung der bereits emittierten $NO_x$-Anteile, wie groß ein in Bezug auf die verbleibende Zeitspanne für die Zwecke dieser Berechnung als konstant angesehener (aber laufend neu in jedem Berechnungsschritt berechneter) $NO_x$-Massenstrom sein muss, damit sich am Ende der vorgebbaren oder vorgegebenen Zeitspanne $t_{av}$ an der Austrittstelle der Abgasnachbehandlungsvorrichtung der vorgebbare oder vorgegebene Zielwert $\overline{NO_{x,Tar}}$ ergibt. Dieser berechnete $NO_x$-Massenstrom wird laufend als $NO_x$-Referenzwert $NO_{x,Ref}(t)$ zum aktuellen Zeitpunkt t (für $t_1 < t < t_2$) aus der nachstehenden Gleichung bestimmt und laufend an die Abgasregeleinrichtung als $NO_x$-Sollwert weitergegeben:

$$\overline{NO_{x,Tar}} = \frac{1}{t_{av}}\left(\int_{t_1}^{t} NO_x(t')dt' + (t_2 - t)NO_{x,Ref}(t)\right)$$

Der Ausdruck auf der linken Seite der Gleichung ist bekannt, da er der Motorregeleinheit als Zielwert vorgegeben oder vorgebbar ist. Der erste Term auf der rechten Seite dieser Gleichung berücksichtigt die in der Zeitspanne $t_1 < t$ bereits emittierten und daher bekannten $NO_x$-Anteile (diese können gemessen werden oder - in Abhängigkeit des Zustands des Motorblocks und der Abgasbehandlungsvorrichtung - während der Zeitspanne $t_1 < t$ einem Look-Up-Table entnommen oder berechnet werden), der zweite Term berechnet jenen $NO_x$-Anteil, welcher aus der Sicht des Zeitpunkts t in der verbleibenden Zeitspanne $t < t_2$ emittiert werden darf, damit sich der vorgebbare oder vorgegebene Zielwert $\overline{NO_{x,Tar}}$ ergibt und soll mithilfe dieser Gleichung berechnet werden. Auflösen dieser Gleichung nach der Unbekannten $NO_{x,Ref}(t)$ ergibt:

$$NO_{x,Ref}(t) = \frac{1}{t_2 - t}\left(t_{av} \cdot \overline{NO_{x,Tar}} - \int_{t_1}^{t} NO_x(t')dt'\right)$$

Es ist denkbar, dass die Motorregeleinrichtung dazu konfiguriert ist, vor Beginn der Zeitspanne $t_{av}$ bereits angefallene $NO_x$-Anteile der Abgase kumuliert für die Berechnung des $NO_x$-Referenzwerts $NO_{x,Ref}(t)$ zu berücksichtigen. Diese kumulierten $NO_x$-Anteile *cumulNO_x* können aus Messungen, Berechnungen oder Schätzungen bekannt sein. In diesem Fall kann $NO_{x,Ref}(t)$ aus dem bekannten $\overline{NO_{x,Tar}}$ den bekannten, kumulierten $NO_x$-Anteile *cumulNO_x* und der bekannten, bisher emittierten $NO_x$-Anteile durch Auflösen nach $NOx_{Ref}(t)$ berechnet werden:

$$NO_{x,Ref}(t) = \frac{1}{t_2 - t}\left(t_{av} \cdot \overline{NO_{x,Tar}} - \int_{t_1}^{t} NO_x(t')dt' - cumulNO_x\right)$$

Je mehr Zeit der vorgebbaren oder vorgegebenen Zeitspanne $t_{av}$ verstrichen ist, desto mehr nähert sich der $NO_x$-Referenzwert $NO_{x,Ref}(t)$ dem vorgebbaren oder vorgegebenen Zielwert $\overline{NO_{x,Tar}}$ an, bis er diesen schließlich für $t = t_2$ erreicht.

Nach dem Ablauf der vorgebbaren oder vorgegebenen Zeitspanne kann die Motorregeleinrichtung dazu konfiguriert sein, den Motorblock und die Katalysatorregeleinrichtung so zu regeln, wie es einem stationären Betrieb der Brennkraftmaschine entspricht. Diese Art der Regelung ist aus dem Stand der Technik bekannt und muss daher hier nicht näher beschrieben werden.

Wieviel von dem aus dem Motorblock kommenden und in die Abgasnachbehandlungsvorrichtung eintretenden

Massenstrom an $NO_x$-Anteil $NO_{x,in}(t)$ im zumindest einen SCR-Katalysator (und in einem ggf. ebenfalls vorhandenen Oxidationskatalysator) reduziert wird und diese als austretenden Massenstrom $NO_{x,out}(t)$ verlässt, lässt sich einfach durch die sogenannte Konversionsrate $R_{conv}(t)$ ausdrücken, welche durch die nachstehende Gleichung definiert ist:

$$R_{conv}(t) = 1 - \frac{NO_{x,out}(t)}{NO_{x,in}(t)}$$

Die momentanen Massenströme $NO_{x,in}(t)$ und $NO_{x,out}(t)$ können durch $NO_x$-Sensoren gemessen werden. Alternativ können Werte aus einem Look-Up-Table oder aus einer Berechnung verwendet werden, da aus der Theorie bekannt ist, welche Massenströme für einen bestimmten Zustand des Motorblocks zu erwarten sind.

Die Konversionsrate $R_{conv}(t)$ zum Zeitpunkt t kann von der Motorregeleinrichtung als absoluter Wert oder - bevorzugt - relativ zu einem erwarteten Zielwert überwacht und für die Steuerung oder Regelung der Katalysatorregeleinrichtung verwendet werden.

Ist der zumindest eine SCR-Katalysator zu einem Zeitpunkt t nicht aktiv (z. B. weil die Temperatur der katalytischen Zone zu gering ist) und kein Oxidationskatalysator vorhanden, gilt natürlich $NO_{x,out}(t) = NO_{x,in}(t)$ und damit $R_{conv}(t) = 0$.

Besonders bevorzugt ist vorgesehen, dass die Motorregeleinrichtung dazu konfiguriert ist, während eines ersten Teils der vorgebbaren oder vorgegebenen Zeitspanne (bevorzugt ab Start der Brennkraftmaschine) einen momentanen (zeitabhängigen, insbesondere rampenförmigen) Sollwert für die vorzugsweise elektrische Leistung der Brennkraftmaschine niedriger vorzugeben, als es dem gewünschten Sollwert in einem stationären Betrieb der Brennkraftmaschine entspricht.

In diesem ersten Teil der vorgebbaren oder vorgegebenen Zeitspanne kommt es zu einem ersten und ggf. zu einem zweiten Maximum der $NO_x$-Anteile des Abgases.

Ein erstes Maximum ergibt sich durch das Anfetten des Luft-Brennstoff-Gemisches zum Hochfahren der Drehzahl.

Ein zweites Maximum kann sich ergeben, wenn zumindest ein vorhandener Turbolader zugeschaltet wird, bis diese(r) das Turboloch überwindet bzw. überwinden. Nach Überwinden des Turbolochs ist der Motorblock in einem Zustand, in welchem ein Istwert für einen Ladedruck einer Ladeluft (oder eines Gemisches) einem durch die Motorregeleinrichtung vorgegebenen Sollwert folgen kann, sodass sich stabile Werte für den $NO_x$-Anteil des Abgases ergeben (allfällige Abweichungen können auf Luftfeuchtigkeit, Ladelufttemperatur usw. zurückzuführen sein).

In einem bevorzugten Ausführungsbeispiel ist vorgesehen, dass die Motorregeleinrichtung dazu konfiguriert ist, bei der Regelung des Motorblocks neben einem Zustand des Motorblocks auch einen Zustand der Abgasnachbehandlungsvorrichtung zu berücksichtigen. Dies kann sich auf den oben beschriebenen ersten Teil der vorgebbaren oder vorgegebenen Zeitspanne beziehen und/oder (unabhängig vom ersten Teil der vorgebbaren oder vorgegebenen Zeitspanne) angezeigt sein, um einer Alterung des zumindest einen SCR-Katalysators (welche die Effizienz der $NO_x$-Reduktion senkt) Rechnung zu tragen.

In diesem ersten Teil der vorgebbaren oder vorgegebenen Zeitspanne liegt die Temperatur der katalytischen Zone des zumindest einen SCR-Katalysators noch unterhalb einer für eine Reduktion des $NO_x$ notwendigen Temperatur, sodass hier die hinter den Kolben-Zylinder-Einheiten vorliegenden $NO_x$-Anteile des Abgases im Wesentlichen gleich groß sind wie die $NO_x$-Anteile des Abgases an der Austrittstelle der Abgasnachbehandlungsvorrichtung (also $R_{conv}(t) \approx 0$). Die Berücksichtigung dieses Zustandes des zumindest einen SCR-Katalysators durch die Motorregeleinrichtung bei der Ansteuerung des Motorblockes in einem bevorzugten Ausführungsbeispiel bewirkt, dass insgesamt während des ersten Teils der vorgebbaren oder vorgegebenen Zeitspanne vom Motorblock weniger $NO_x$-Anteile erzeugt werden.

Dies kann so erfolgen, dass die Motorregeleinrichtung dazu konfiguriert ist, einen aktuellen, ersten Betriebspunkt des Motorblocks, welcher nach Erreichen einer Nennleistung der Brennkraftmaschine vorliegt, zu einem transienten Betriebspunkt mit geringeren $NO_x$-Emissionen zu bewegen, beispielsweise zu einem Betriebspunkt mit höheren Temperaturen der Abgase unmittelbar hinter Auslassventilen der Kolben-Zylinder-Einheiten (vorzugsweise wird dabei von der Motorregeleinrichtung die Temperatur der heißesten Kolben-Zylinder-Einheit verwendet). Dies kann z. B. durch Verstellen eines Zündzeitpunkts der Zündung in den Kolben-Zylinder-Einheiten auf spät erfolgen (wodurch das entstehende $NO_x$ verringert wird). Es kann auch - ggf. alternativ - ein (vorzugsweise gleichzeitiges) Abmagern des in den Kolben-Zylinder-Einheiten für die Verbrennung zur Verfügung stehenden Brennstoff-Luft-Gemisches zur Verringerung des entstehenden $NO_x$ eingesetzt werden. Diese Maßnahmen erfolgen natürlich so, dass es zu keinen Fehlzündungen kommt. In einem Verbrennungsschaubild (mit den Koordinatenachsen "Luftüberschusszahl" und "Zündzeitpunkt") wandert der Betriebspunkt dadurch innerhalb der Klopfgrenze (engl. "knock limit") und der Fehlzündungsgrenze (engl. "misfire limit") in Richtung höherer Temperaturen der Abgase.

Dies kann optional in einem ersten Schritt (entlang einer ersten Trajektorie im Verbrennungsschaubild) mittels einer Vorsteuerung erfolgen, um eine schnelle erste Verstellung des Betriebspunkts des Motorblocks zu bewirken. An diese kann sich in einem zweiten Schritt (entlang einer zweiten Trajektorie im Verbrennungsschaubild) eine Regelung anschließen, um den sich ergebenden transienten Betriebspunkt genauer wählen zu können.

Beginnt der zumindest eine SCR-Katalysator, den $NO_x$-Anteil im Abgas zu reduzieren (weil die katalytische Zone die erforderliche Temperatur erreicht hat), steuert und/oder regelt die Motorregeleinrichtung den Motorblock so, dass sich der aktuelle Betriebspunkt vom transienten Betriebspunkt weg in Richtung erster Betriebspunkt zurück bewegt (vorzugsweise auf derselben Trajektorie wie für die Bewegung von Nennbetriebspunkt zum stationären Betriebspunkt, nur in umgekehrter Richtung) und diesen erreicht.

Für die oben diskutierte Steuerung und/oder Regelung kann die Motorregeleinrichtung die aktuelle Konversionsrate $R_{conv}(t)$ heranziehen. Ist der aktuelle $NO_x$-Anteil zu hoch (d. h. die Abgasnachbehandlungsvorrichtung ist nicht dazu in der Lage, an der Austrittstelle den durch die Motorregeleinheit vorgegebenen $NO_x$-Referenzwert $NO_{x,Ref}(t)$ einzuhalten) und liegt die aktuelle Konversionsrate $R_{conv}(t)$ unter einem vorgebbaren oder vorgegebenen Wert (dieser kann z. B. nahe bei Null liegen), erfolgt die vorstehend beschriebene Verschiebung des Betriebspunkt vom ersten Betriebspunkt zum transienten Betriebspunkt mit reduzierten $NO_x$-Emissionen hin. Erreicht oder übersteigt die aktuelle Konversionsrate $R_{conv}(t)$ den vorgebbaren oder vorgegebenen Wert, erfolgt die vorstehend beschriebene Rückverschiebung des Betriebspunkts vom transienten Betriebspunkt zum ersten Betriebspunkt hin, vorzugsweise in (beispielsweise proportionaler) Abhängigkeit von der aktuellen Konversionsrate $R_{conv}(t)$, bis diese eine Ziel-Konversionsrate erreicht hat, bei welcher der erste Betriebspunkt erreicht sein soll.

Sobald die für eine Reduktion des $NO_x$ erforderliche Temperatur der katalytischen Zone des zumindest einen SCR-Katalysators erreicht ist, erkennt die Motorregelung also diesen neuen Zustand des zumindest einen SCR-Katalysators und kann den Motorblock nun so ansteuern, dass der Motorblock beim ersten Betriebspunkt effizienzoptimal (und dafür bei höheren $NO_x$-Anteilen des Abgases in einer Abgassammelleitung des Motorblocks) betrieben wird.

Zusammenfassend gesagt, erfolgt auf diese Weise eine Steuerung und/oder Regelung des aktuellen Betriebspunkts des Motorblocks in Abhängigkeit von der Konversionsrate $R_{conv}(t)$ der Abgasnachbehandlungsvorrichtung (ggf. des zumindest einen SCR-Katalysators, falls keine weiteren Katalysatoren vorhanden sind), vorzugsweise nach Ablauf einer Startzeit der Brennkraftmaschine.

Zur Reduktion des während der Startzeit von der Brennkraftmaschine emittierten $NO_x$-Anteils der Abgase ist - in Kombination mit den vorstehend beschriebenen Ausführungsbeispielen oder in Isolation - bei einem bevorzugten Ausführungsbeispiel der Erfindung vorgesehen, dass die Motorregeleinheit dazu konfiguriert ist, während der Startzeit der Brennkraftmaschine eine Leistungsrampe für den Motorblock in einem ersten zeitlichen Abschnitt, vorzugsweise nach Erreichen einer Mindestleistung, bis zum Erreichen eines vorgegebenen Grenzwerts für die Leistung mit einer ersten, geringeren Steigung vorzugeben und in einem zweiten zeitlichen Abschnitt bis zum Erreichen einer Nennleistung der Brennkraftmaschine mit einer zweiten, größeren Steigung vorzugeben, wobei vorzugsweise vorgesehen ist, dass die größere Steigung in Abhängigkeit der verbleibenden Zeit bis zum Erreichen der Startzeit berechnet wird. Die erste, geringere Steigung verhindert ein übermäßiges Anfetten des Luft-Brennstoff-Gemisches und damit eine übermäßige Produktion an $NO_x$ im Abgas im ersten zeitlichen Abschnitt. Die zweite, größere Steigung stellt sicher, dass die Nennleistung innerhalb der gewünschten Startzeit erreicht wird.

Zur Reduktion des während der Startzeit von der Brennkraftmaschine emittierten $NO_x$-Anteils der Abgase ist - in Kombination mit den vorstehend beschriebenen Ausführungsbeispielen oder in Isolation - bei einem bevorzugten Ausführungsbeispiel der Erfindung vorgesehen, dass die Motorregeleinrichtung zur Reduktion des während einer Startzeit von der Brennkraftmaschine emittierten $NO_x$-Anteils der Abgase dazu konfiguriert ist, innerhalb der Startzeit der Brennkraftmaschine eine Luftüberschusszahl des für die Verbrennung in den Kolben-Zylinder-Einheiten zur Verfügung stehenden Luft-Brennstoff-Gemisches von einem niedrigeren ersten Wert auf einen höheren zweiten Wert zu erhöhen. Dies reduziert die während der Startzeit von der Brennkraftmaschine emittierten $NO_x$-Anteile der Abgase.

Bei einem bevorzugten Ausführungsbeispiel der Erfindung ist - in Kombination mit den vorstehend beschriebenen Ausführungsbeispielen oder in Isolation - vorgesehen, dass die Motorregeleinrichtung dazu konfiguriert ist, einen Ladedruck des Motorblocks nach Erreichen einer Nennleistung der Brennkraftmaschine für eine vorgebbare oder vorgegebene Zeitspanne anzuheben. Damit kann ein Abmagern des für die Verbrennung in den Kolben-Zylinder-Einheiten zur Verfügung stehenden Luft-Brennstoff-Gemisches und damit eine Reduktion des aus dem Motorblock austretenden $NO_x$-Anteil des Abgases erreicht werden.

Der Nennbetriebspunkt der Brennkraftmaschine ist der gewünschte Betriebspunkt in einem stationären Betrieb, bei diesem wird ein mageres Luft-Brennstoff-Gemisch mit einer Luftüberschusszahl $\lambda > 1$ verwendet). Bevorzugt ist also die Brennkraftmaschine als Magermotor ausgebildet, d. h. die Brennkraftmaschine wird stets mit einer Luftüberschusszahl $\lambda > 1$ betrieben und auch bei einem allfälligen Anfetten wird eine Luftüberschusszahl $\lambda > 1$ beibehalten.

Ganz allgemein kann ein Abmagern durch ein Anheben des Ladedrucks (so wie beispielsweise in EP 0 259 382 B1 beschrieben) und/oder durch eine direkte Verringerung der absoluten Menge an Brennstoff erreicht werden. Entsprechend kann ein Anfetten durch ein Absenken des Ladedrucks oder eine direkte Erhöhung der absoluten Menge des Brennstoffs erzielt werden.

Bei einem Ausführungsbeispiel der Erfindung ist - in Kombination mit den vorstehend beschriebenen Ausführungsbeispielen oder in Isolation - vorgesehen, dass die Motorregeleinrichtung dazu konfiguriert ist, bei der Wahl einer gewünschten Luftüberschusszahl λ eine Synchronisierdauer (Zeitdauer bis zum Erreichen einer Synchrondrehzahl bezogen auf eine Netzfrequenz des Energieversorgungsnetzes) eines die Brennkraftmaschine beinhaltenden Gensets mit einem Energieversorgungsnetz zu berücksichtigen. Dabei können z. B. Anfettgrenzen abhängig von der Synchronisierdauer gewählt werden. Ist z. B. die Synchronisierdauer kurz (d. h. die Synchrondrehzahl wird schnell erreicht), soll weniger stark angefettet werden als bei einer längeren Synchronisierdauer, da ja mehr Zeit von der Startzeit zur Verfügung bleibt, um die Nennleistung der Brennkraftmaschine zu erreichen. Ist die Synchronisierdauer hingegen lang (d. h. die Synchrondrehzahl wird langsam erreicht), muss stärker angefettet werden als bei einer kürzeren Synchronisierdauer, da weniger Zeit von der Startzeit zur Verfügung bleibt, um die Nennleistung der Brennkraftmaschine zu erreichen. Die Begriffe "lang" und "kurz" sind natürlich in Bezug auf einen vorgegebenen oder vorgebbaren Grenzwert für die Synchronisierdauer zu sehen.

Es ist bevorzugt vorgesehen, die Synchronisierzeit zu messen und die Entscheidung zur weiteren Vorgehensweise hinsichtlich der Luftüberschusszahl λ zu treffen, sobald die Länge der Synchronisierzeit feststeht.

Beispiele für Sensoren, über welche die Motorregeleinrichtung Informationen über den Zustand des Motorblocks (insbesondere im Hinblick auf die oben beschriebenen Regelaufgaben) und den Zustand der Abgasnachbehandlungsvorrichtung erhalten oder bestimmen kann, sind $NO_x$-Sensoren und Temperatursensoren zum Messen einer Abgastemperatur.

Beispielsweise kann zumindest ein $NO_x$-Sensor in einer Abgassammelleitung nach einer ggf. vorhandenen Niederdruck-Turbine eines Turboladers vor einer Injektionsvorrichtung für Reduktionsmittel des zumindest einen SCR-Katalysators (bevorzugt ist pro Motorbank des Motorblocks zumindest ein solcher $NO_x$-Sensor vorgesehen) und/oder zumindest ein $NO_x$-Sensor an einer Austrittstelle der Abgasnachbehandlungsvorrichtung (z. B. des zumindest einen SCR-Katalysators und/oder eines ggf. vorhandenen Oxidationskatalysators) vorgesehen sein.

Beispielsweise kann für jede Kolben-Zylinder-Einheit ein Temperatursensor unmittelbar hinter dem bzw. den Auslassventil(en) der jeweiligen Kolben-Zylinder-Einheit angeordnet sein. Bevorzugt wird die Temperatur der Abgase aller Kolben-Zylinder-Einheiten bestimmt und von der Motorregeleinrichtung die Temperatur der heißesten Kolben-Zylinder-Einheit für die Regelung der Brennkraftmaschine verwendet.

Beispielsweise kann zumindest ein Temperatursensor an einer Einlassstelle des zumindest einen SCR-Katalysators vorgesehen sein.

Beispielsweise kann zumindest ein Temperatursensor an einer Auslassstelle eines ggf. vorhandenen Oxidationskatalysators vorgesehen sein.

Die erfindungsgemäße Brennkraftmaschine ist vorzugsweise eine fremdgezündete VierTakt-Maschine und weist bevorzugt wenigstens acht, besonders bevorzugt wenigstens zwanzig, Kolben-Zylinder-Einheiten auf. Die Erfindung kann bevorzugt bei einer stationären Brennkraftmaschine eingesetzt werden. Die Brennkraftmaschine dient bevorzugt als Teil eines Gensets als mechanischer Antrieb, z. B. in Kombination mit einem mechanisch koppelbaren oder gekoppelten elektrischen Generator zur Erzeugung von elektrischer Energie.

Die Einbringung von Brennstoff in die Kolben-Zylinder-Einheiten kann mittels Port-Injection oder in Form eines vorgemischten Luft-Brennstoff-Gemisches erfolgen.

Ein bevorzugtes Reduktionsmittel ist Harnstoff.

Bei einem bevorzugten Ausführungsbeispiel der Erfindung ist vorgesehen, dass die Motorregeleinrichtung dazu konfiguriert ist, einen, insbesondere von der Betriebsart (stationär oder transient) abhängigen, - ggf. zeitabhängigen - vorgegebenen oder vorgebbaren Grenzwert für einen momentanen Massenstrom oder für eine momentane Konzentration der $NO_x$-Anteile der Abgase in einer Abgassammelleitung nicht zu überschreiten.

Ausführungsbeispiele der Erfindung werden anhand der Figuren diskutiert. Es zeigen:

Fig. 1   eine erfindungsgemäße Brennkraftmaschine
Fig. 2   eine Darstellung des Zustands der Brennkraftmaschine über die Zeit anhand ausgewählter Parameter
Fig. 3   eine weitere Darstellung des Zustands der Brennkraftmaschine über die Zeit anhand ausgewählter Parameter mit Anpassung einer Lastrampe
Fig. 4   ein gesteuertes und geregeltes Wandern des Betriebspunkts des Motorblocks in einem Verbrennungsschaubild
Fig. 5   eine Darstellung des Zustands der Brennkraftmaschine über die Zeit anhand ausgewählter Parameter bei Verwendung der in Fig. 4 dargestellten Steuer- und Regelstrategie
Fig. 6   ein erfindungsgemäßes Genset

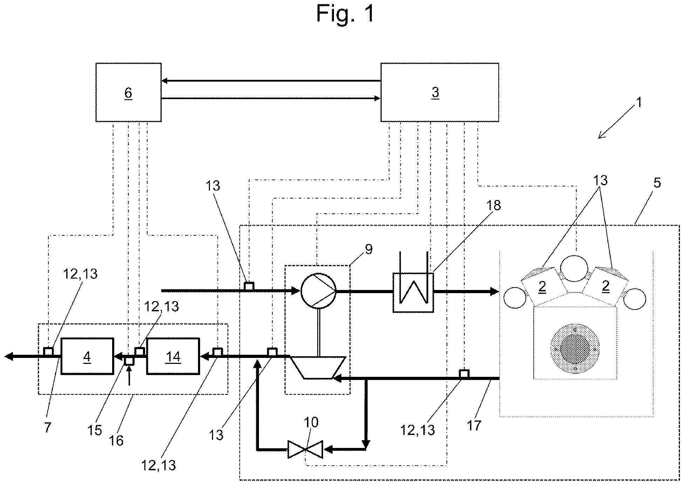

Die in den Fig. 1, 3 und 5 mit gleichen Bezugszeichen bezeichneten Zeitpunkte sind identisch.

Fig. 1 zeigt schematisch ein Ausführungsbeispiel einer erfindungsgemäßen Brennkraftmaschine 1 mit folgenden Komponenten:

2   Kolben-Zylinder-Einheiten

3    Motorregeleinrichtung
4    SCR-Katalysator
5    Motorblock
6    Katalysatorregeleinrichtung
7    Austrittstelle der Abgasnachbehandlungsvorrichtung
8    elektrischer Generator eines die Brennkraftmaschine beinhaltenden Gensets
9    Turbolader (optional)
10   Wastegate (optional)
11   Zündeinrichtung
12   $NO_x$-Sensor (optional), insbesondere müssen nicht an allen gezeigten Positionen $NO_x$-Sensoren vorhanden sein
13   Temperatursensor (optional), insbesondere müssen nicht an allen gezeigten Positionen Temperatursensoren vorhanden sein
14   Oxidationskatalysator (optional), insbesondere kann alternativ oder zusätzlich ein dem SCR-Katalysator vorgeschalteter Oxidationskatalysator und/oder Ammoniak-Schlupf-Katalysator vorgesehen sein
15   Injektionsvorrichtung für Reduktionsmittel
16   Abgasnachbehandlungsvorrichtung
17   Abgassammelleitung
18   Ladelufttemperiervorrichtung (optional)

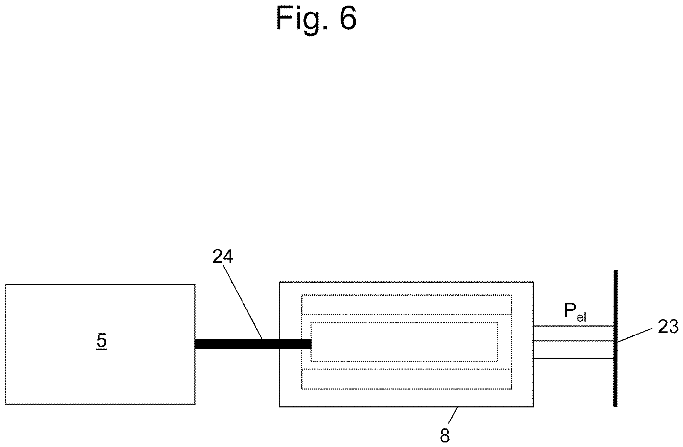

Die Fig. 6 zeigt ein mit einem Energieversorgungsnetz 23 elektrisch verbindbares oder verbundenes Genset mit einer erfindungsgemäßen Brennkraftmaschine 1, welche mittels einer mechanischen Kupplung 24 mit einem elektrischen Generator 8 gekoppelt ist.

Unter dem Zustand des Motorblocks 5 versteht man insbesondere (einzeln oder in beliebiger Kombination, es müssen natürlich nicht alle nachstehenden Größen berücksichtigt werden):

- die unmittelbar hinter einer Turbine eines ggf. vorhandenen Turboladers 9 und/oder unmittelbar hinter Auslassventilen der Kolben-Zylinder-Einheiten 2 vorliegende Temperatur der Abgase
- Temperatur von Betriebsmitteln (wie Öl, Kühlwasser, ...) oder eines Materials des Motorblocks 5 selbst
- $NO_x$-Anteil der Abgase in einer Abgassammelleitung 17 nach einer ggf. vorhandenen Niederdruck-Turbine eines Turboladers 9 vor einer Injektionsvorrichtung 15 für Reduktionsmittel des zumindest einen SCR-Katalysators 4 (bevorzugt pro Motorbank des Motorblocks 5)
- $NO_x$-Anteil der Abgase an einer Austrittstelle 7 des zumindest einen SCR-Katalysators
- Verhältnis von NO-Anteil zu $NO_2$ des Abgases, oder des $NO_2$-Anteils zu $NO_x$ oder des NO-Anteils zu $NO_x$, dies kann beliebig umgerechnet werden, da gilt: $NO_x = NO + NO_2$
- Ist-Drehzahl einer durch die Kolben-Zylinder-Einheiten 2 des Motorblocks 5 angetriebenen Kurbelwelle der Brennkraftmaschine 1
- Drehzahl eines ggf. vorhandenen Turboladers 9
- sich durch einen Öffnungsgrad eines ggf. vorhandenen Wastegates 10 ergebender Abgasendruck
- gewählte Zündzeitpunkte für die Kolben-Zylinder-Einheiten 2
- Ein/Aus-Zustand von Zündvorrichtungen für die Kolben-Zylinder-Einheiten 2
- Ladedruck (Druck vor den Einlassventilen der Kolben-Zylinder-Einheiten 2)
- Ladetemperatur (Temperatur vor den Einlassventilen der Kolben-Zylinder-Einheiten 2)
- Ansauglufttemperatur
- Brennstoffmassenstrom oder Gemischmassenstrom zu den Kolben-Zylinder-Einheiten 2
- Luftmassenstrom
- aktuell erzeugte mechanische und/oder elektrische (im Falle eines Gensets) Leistung
- Ventilsteuerzeiten (im Falle eines variablen Ventiltriebs)

Der Zustand des Motorblocks 5 kann über die im Stand der Technik bekannten (und daher nicht dargestellten) Aktuatoren durch die Motorregeleinrichtung 3 beeinflusst werden. Beispielsweise kann:

- Die Temperatur der Abgase unmittelbar hinter Auslassventilen der Kolben-Zylinder-Einheiten 2 beeinflusst werden durch Wahl eines Zündzeitpunkts und/oder der Luftüberschusszahl des Brennstoff-Luft-Gemisches und/oder Abgasrückführung, Gesamtmenge an Brennstoff, Temperatur der Ladeluft oder des Brennstoff-Luft-Gemisch vor Einlassventilen der Kolben-Zylinder-Einheiten 2, Skip-Firing, Ventilsteuerzeiten usw.
- Der $NO_x$-Anteil der Abgase in der Abgassammelleitung 17 beeinflusst werden durch Wahl einer Verbrennungstemperatur und/oder Verbrennungsgeschwindigkeit, insbesondere durch Wahl eines Zündzeitpunkts und/oder der Luftüberschusszahl $\lambda$ des Brennstoff-Luft-Gemisches und/oder Abgasrückführung, Gesamtmenge an Brennstoff, Temperatur der Ladeluft oder des Brennstoff-Luft-Gemisch vor Einlassventilen der Kolben-Zylinder-Einheiten 2, Ventilsteuerzeiten usw.

- Den Abgasgegendruck durch den Öffnungsgrad eines ggf. vorhandenen Wastegates 10 oder durch eine variable Turbinengeometrie (VTG) beinflusst werden.
- Die gewählten Zündzeitpunkte und/oder den Ein/Aus-Zustand (Skip-Firing) von Zündvorrichtungen für die Kolben-Zylinder-Einheiten 2 beeinflusst werden durch entsprechendes Ansteuern der Zündvorrichtungen der Kolben-Zylinder-Einheiten 2.

Unter dem Zustand der Abgasnachbehandlungsvorrichtung 16 versteht man insbesondere (einzeln oder in beliebiger Kombination, es müssen natürlich nicht alle nachstehenden Größen berücksichtigt werden):

- dem zumindest einen SCR-Katalysator 4 zugeführten Abgasmassenstrom
- eine Temperatur einer katalytischen Zone und/oder eine Temperatur des Abgases an einer Einlassstelle und/oder eine Temperatur des Abgases an einer Austrittstelle des zumindest einen SCR-Katalysators 4
- einen Massenstrom Redux an in den zumindest einen SCR-Katalysator 4 eingebrachtem Reduktionsmittel
- eine Menge an in der katalytischen Zone des zumindest einen SCR-Katalysators 4 umgesetztem Reduktionsmittel
- ein $NH_3$-Speicherzustand des zumindest einen SCR-Katalysator 4
- den Zustand einer ggf. vorhandenen Heizvorrichtung für den zumindest einen SCR-Katalysator 4
- Zustand eines ggf. vorhandenen Oxidationskatalysators 14

Der Zustand der Abgasnachbehandlungsvorrichtung 16 kann über die im Stand der Technik bekannten (und daher nicht dargestellten) Aktuatoren durch die Katalysatorregeleinrichtung 6 beeinflusst werden. Beispielsweise kann beeinflusst werden:

- der dem zumindest einen SCR-Katalysator 4 zugeführten Abgasmassenstrom durch die Wahl einer Leistung oder eines Betriebspunkts des Motorblocks 5
- die Temperatur der katalytischen Zone des zumindest einen SCR-Katalysators 4 durch eine Temperatur des zugeführten Abgases und/oder eine Heizvorrichtung und/oder Änderung des Abgasmassenstroms
- die Temperatur an der Einlassstelle des zumindest einen SCR-Katalysators 4 durch eine Temperatur des zugeführten Abgases und/oder eine Heizvorrichtung
- einen Massenstrom Redux an in den zumindest einen SCR-Katalysator 4 eingebrachtem Reduktionsmittel durch entsprechendes Ansteuern einer Injektionsvorrichtung 15 für Reduktionsmittel
- den NHs-Speicherzustand in der katalytischen Zone des zumindest einen SCR-Katalysators 4 durch die zugeführte Menge an Reduktionsmittel, der Temperatur der katalytischen Zone, Änderung des Abgasmassenstroms, Änderung des $NO_x$-Anteils und/oder $NO_2$-Anteils des Abgases

Der Motorregeleinrichtung 3 ist ein Zielwert $\overline{NO_{x,Tar}}$ für einen sich in Bezug auf eine vorgebbare oder vorgegebene Zeitspanne $t_{av}$ an einer Austrittstelle 7 der Abgasnachbehandlungsvorrichtung 16 ergebenden $NO_x$-Durchschnittswert $\overline{NO_x}$ des $NO_x$-Anteils der Abgase vorgebbar oder vorgegeben.

Die Motorregeleinrichtung 3 befindet sich zumindest während der Zeitspanne $t_{av}$ in einem Betriebsmodus, in welchem sie dazu konfiguriert ist, laufend unter Berücksichtigung bereits emittierter $NO_x$-Anteile und des vorgebbaren oder vorgegebenen Zielwerts $\overline{NO_{x,Tar}}$ einen $NO_x$-Referenzwert $NO_{x,Ref}(t)$ für die Katalysatorregeleinrichtung (6) zu berechnen, der so gewählt ist, dass sich am Ende der vorgebbaren oder vorgegebenen Zeitspanne $t_{av}$ an der Austrittstelle der Abgasnachbehandlungsvorrichtung 16 der vorgebbare oder vorgegebene Zielwert $\overline{NO_{x,Tar}}$ ergibt und den berechneten $NO_x$-Referenzwert $NO_{x,Ref}(t)$ der Katalysatorregel-einrichtung 6 als $NO_x$-Sollwert zuzuführen.

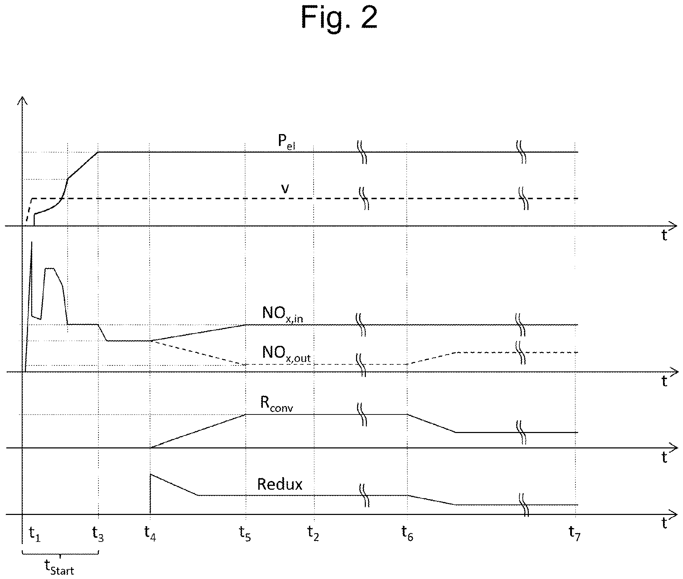

Fig. 2 zeigt einen typischen Betriebsfall bei dem in Fig. 1 dargestellten Ausführungsbeispiel einer erfindungsgemäßen Brennkraftmaschine 1, hier ausgehend von einem Start der Brennkraftmaschine 1 durch Betätigung eines Startknopfs beim Zeitpunkt $t_1$.

Zum Zeitpunkt $t_3$ hat die Brennkraftmaschine 1 die Nennleistung (hier in Form einer elektrischen Nennleistung $P_{el}$ eines sich über einen gekoppelten elektrischen Generator ergebenden Gensets - nicht in Fig. 1 dargestellt, da dem Stand der Technik entsprechend, vgl. aber Fig. 6) erreicht, sodass für die Startzeit gilt: $t_{Start} = t_3 - t_1$. Der Startvorgang ist also zum Zeitpunkt $t_3$ (hier beispielhaft ca. 5 Minuten) beendet.

Innerhalb der Startzeit $t_{Start}$ sind in Bezug auf die im Motorblock 5 entstehenden $NO_x$-Anteile $NO_{x,in}$ der Abgase (der Index "in" ist gewählt, weil es sich hierbei um die in die Abgasnachbehandlungsvorrichtung 16 einströmenden $NO_x$-Anteile handelt) zwei deutliche Peaks erkennbar, nämlich ein erster Peak aufgrund des Aufbaus der Drehzahl v auf einen Nennwert (Synchrondrehzahl in Bezug auf ein Energieversorgungsnetz) und - nach Kopplung des Gensets mit dem Energieversorgungsnetz und der daraus resultierenden Lastaufnahme - ein zweiter Peak aufgrund des Aufbaus des Drehmoments während des Turbolochs (welches in der elektrischen Leistung als hinter der vorgegebenen Rampe zurückbleibende Abweichung erkennbar ist). Nach Überwindung des Turbolochs (sobald der oder die Turbolader auf Drehzahl gebracht ist bzw. sind) sinken die im Motorblock 5 entstehenden $NO_x$-Anteile $NO_{x,in}$ der Abgase auf einen ersten, für den Rest der Startzeit $t_{Start}$ konstanten Wert.

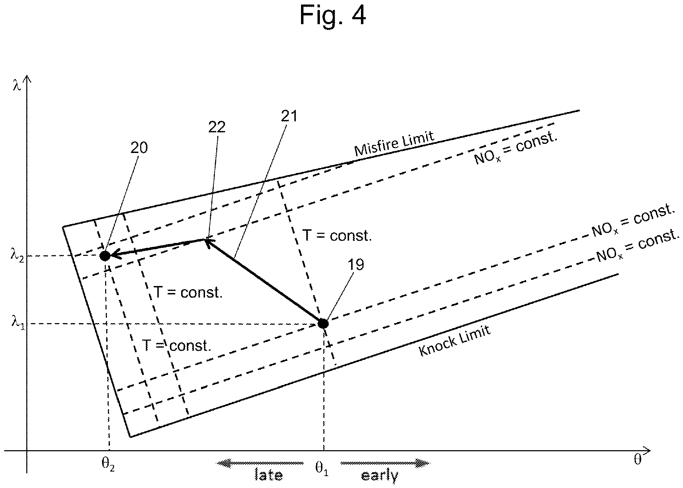

Das nach Beendigung des Startvorganges erkennbare Absinken der im Motorblock 5 entstehenden $NO_x$-Anteile $NO_{x,in}$ der Abgase ist darauf zurückzuführen, dass die Motorregeleinrichtung 3 dazu konfiguriert ist, nach Erreichen einer Nennleistung der Brennkraftmaschine 1 für eine vorgebbare oder vorgegebene Zeitspanne einen Ladedruck des Motorblocks 5 zu erhöhen und/oder einen Zündzeitpunkt der Zündung in den Kolben-Zylinder-Einheiten auf spät zu stellen (vergleiche auch das Verbrennungsschaubild der Fig. 4).

Die Motorregeleinrichtung 3 überwacht eine Konversionsrate $R_{conv}(t)$ der Abgasnachbehandlungsvorrichtung als absoluten Wert oder - bevorzugt - relativ zu einem erwarteten Zielwert. Zum Zeitpunkt $t_4$ beginnt der SCR-Katalysator 4 zu arbeiten, da die für die Reduktion des $NO_x$ in der katalytischen Zone notwendige Temperatur erreicht ist und Reduktionsmittel mit einem Massenstrom Redux durch die Injektionsvorrichtung 15 (gesteuert durch die Katalysatorregeleinrichtung 6) in die Abgassammelleitung 17 injiziert wird. Daher beginnt die Konversionsrate $R_{conv}(t)$ ausgehend vom Wert Null anzusteigen und die $NO_x$-Anteile $NO_{x,out}$ der Abgase an der Austrittstelle des SCR-Katalysators 4 beginnen von den $NO_x$-Anteilen $NO_{x,in}$ abzuweichen (der erwartete Zielwert der Konversionsrate $R_{conv}(t)$ ist erst zum Zeitpunkt $t_5$ erreicht).

Ab dem Zeitpunkt $t_4$ beginnt die Motorregeleinrichtung 3, das Luft-Brennstoff-Gemisch wieder anzufetten und den Zündzeitpunkt auf früher zurückstellen (vergleiche auch das Verbrennungsschaubild der Fig. 4). Daher steigen die $NO_x$-Anteile $NO_{x,in}$ wieder auf den Wert zum Zeitpunkt ts, dies kann allerdings hingenommen werden, da ja nunmehr der SCR-Katalysator 4 arbeitet.

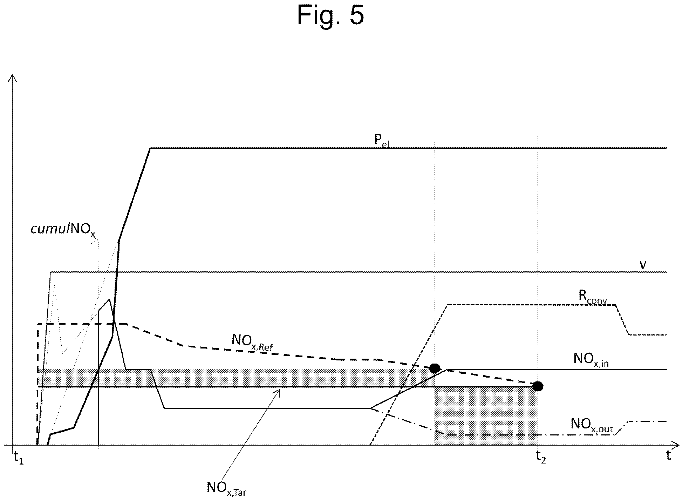

Zum Zeitpunkt $t_2$ ist die vorgegebene Zeitspanne $t_{av}$ (hier beispielhaft 30 Minuten) abgelaufen und der $NO_x$-Referenzwert $NO_{x,Ref}(t)$ für die Katalysatorregeleinrichtung 6 hat den vorgegebenen Zielwert $\overline{NO_{x,Tar}}$ erreicht (vergleiche Fig. 5).

Die Darstellung ab dem Zeitpunkt $t_6$ (hier beispielhaft 2 Stunden) bis zum Zeitpunkt $t_7$ (hier beispielhaft 24 Stunden) zeigt beispielhaft, dass hier ein gegenüber dem 30-Minuten - Zielwert $\overline{NO_{x,Tar}}$ erhöhter 24-Stunden - Zielwert $\overline{NO_{x,Tar}}$ in Kauf genommen wird, um einen Verbrauch an Reduktionsmittel zu minimieren.

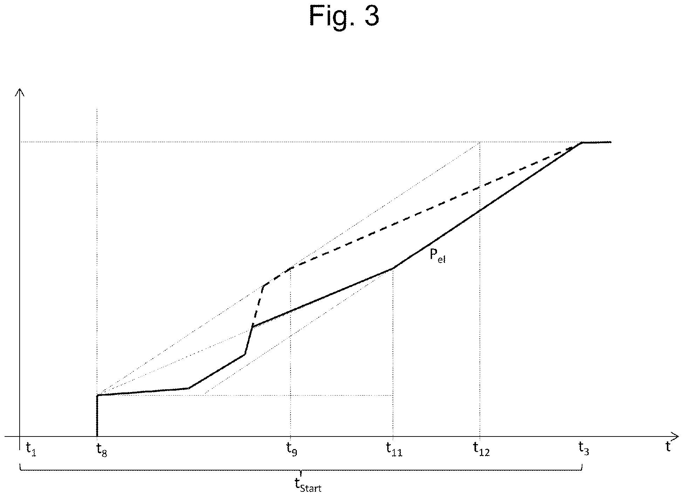

In Fig. 3 ist ein optionales Regelschema dargestellt, in welchem die Motorregeleinrichtung 3 der Brennkraftmaschine 1 der Fig. 1 zur Reduktion des während einer Startzeit von der Brennkraftmaschine (1) emittierten $NO_x$-Anteils der Abgase zusätzlich dazu konfiguriert ist, während der Startzeit $t_{Start}$ der Brennkraftmaschine 1 eine Leistungsrampe (punktierte Linie, welche sich über große Zeitspanne mit der durchgezogen gezeichneten Line deckt) für den Motorblock 3 (hier für die elektrische Leistung $P_{el}$) in einem ersten zeitlichen Abschnitt, vorzugsweise nach Erreichen einer Mindestleistung (Zeitpunkt ts), bis zum Erreichen eines vorgegebenen Grenzwerts für die Leistung (Zeitpunkt $t_{11}$) mit einer ersten, geringeren Steigung vorzugeben und in einem zweiten zeitlichen Abschnitt (ab Zeitpunkt $t_{11}$) bis zum Erreichen einer Nennleistung der Brennkraftmaschine 1 (bei Zeitpunkt $t_3$) mit einer zweiten, größeren Steigung vorzugeben, wobei vorzugsweise vorgesehen ist, dass die größere Steigung in Abhängigkeit der verbleibenden Zeit (Zeitspanne $t_3 - t_{11}$) bis zum Erreichen der Startzeit $t_{Start}$ berechnet wird.

Die durchgezogene Linie stellt die tatsächlich erbrachte Leistung dar. Es ist erkennbar, dass der Motorblock 5 erst nach Überwindung des Turbolochs, was den größten Teil der Zeitspanne $t_9 - t_8$ in Anspruch nimmt, der Leistungsrampe folgen kann.

In strichlierter Form ist eine Leistungsrampe ohne das optionale Regelschema dargestellt, erkennbar ist, dass von vornherein eine steilere Leistungsrampe gewählt ist, was während des Turbolochs zu verstärkten $NO_x$-Emissionen führt, welche ab dem Zeitpunkt $t_9$ durch ein Absenken der Leistungsrampe kompensiert werden müssten, um für den Zeitraum $t_{av}$ den vorgegebenen $NO_x$-Durchschnittswert $\overline{NO_x}$ des $NO_x$-Anteils der Abgase erreichen zu können.

In Fig. 4 ist ein Verbrennungsschaubild dargestellt, in welchem erkennbar ist, dass die Motorregeleinrichtung 3 der Brennkraftmaschine 1 der Fig. 1 optional dazu konfiguriert ist, einen aktuellen, ersten Betriebspunkt 19 des Motorblocks 5, welcher nach Erreichen einer Nennleistung der Brennkraftmaschine 1 vorliegt, zu einem transienten Betriebspunkt 20 mit geringeren $NO_x$-Emissionen zu bewegen (die im Motorblock 5 entstehenden $NO_x$-Emissionen, für welche Geraden mit konstanten Werten eingezeichnet sind, nehmen in Fig. 4 nach oben hin ab), beispielsweise zu einem Betriebspunkt mit höheren Temperaturen (die Temperaturen der Kolben-Zylinder-Einheiten, für welche Geraden mit konstanten Werten eingezeichnet sind, nehmen in Fig. 4 nach links hin zu), der Abgase unmittelbar hinter Auslassventilen der Kolben-Zylinder-Einheiten (vorzugsweise wird dabei von der Motorregeleinrichtung 3 die Temperatur T der heißesten Kolben-Zylinder-Einheit verwendet). Dies kann z. B. durch Verstellen eines Zündzeitpunkts der Zündung in den Kolben-Zylinder-Einheiten auf spät und/oder ein (vorzugsweise gleichzeitiges) Abmagern des in den Kolben-Zylinder-Einheiten für die Verbrennung zur Verfügung stehenden Brennstoff-Luft-Gemisches vom ersten Wert $\lambda_1$ auf einen

zweiten Wert $\lambda_2$ erreicht werden (natürlich so, dass es zu keinen Fehlzündungen oder zu Klopfen kommt). Im Verbrennungsschaubild (mit den Koordinatenachsen "Luftüberschusszahl $\lambda$" und Zündzeitpunkt gemessen am "Kurbelwellenwinkel $\theta$") wandert der Betriebspunkt dadurch innerhalb der Klopfgrenze (engl. "knock limit") und der Fehlzündungsgrenze (engl. "misfire limit") in Richtung höherer Temperaturen der Abgase.

Dies kann optional in einem ersten Schritt (entlang einer ersten Trajektorie 21 im Verbrennungsschaubild) mittels einer Vorsteuerung erfolgen, um eine schnelle erste Verstellung des Betriebspunkts des Motorblocks 5 zu bewirken. An diese kann sich in einem zweiten Schritt (entlang einer zweiten Trajektorie 22 im Verbrennungsschaubild) eine Regelung anschließen, um den sich ergebenden transienten Betriebspunkt 20 genauer wählen zu können.

Beginnt der zumindest eine SCR-Katalysator, den $NO_x$-Anteil im Abgas zu reduzieren (weil die katalytische Zone die erforderliche Temperatur erreicht hat), steuert und/oder regelt die Motorregeleinrichtung den Motorblock so, dass sich der aktuelle Betriebspunkt vom transienten Betriebspunkt weg in Richtung erster Betriebspunkt zurück bewegt (vorzugsweise auf derselben Trajektorie wie für die Bewegung von Nennbetriebspunkt zum stationären Betriebspunkt, nur in umgekehrter Richtung) und diesen erreicht.

Fig. 5 zeigt nochmals die wichtigsten, oben diskutierten Parameter im Lauf der Zeit t. Es ist schön erkennbar, wie sich der zeitabhängige $NO_x$-Referenzwert $NO_{x,Ref}(t)$ immer mehr dem vorgegebenen Zielwert $\overline{NO_{x,Tar}}$ annähert und diesen schließlich zum Zeitpunkt $t_2$ erreicht (rechter dicker Punkt). Beispielhaft sind für einen früheren Zeitpunkt (linker dicker Punkt) in grau hinterlegter Form Rechtecke eingezeichnet, welche den bis zu diesem Zeitpunkt bereits von der Brennkraftmaschine 1 emittierten durchschnittlichen $NO_x$-Anteilen der Abgase und den damit zum Erreichen des vorgegebenen Zielwerts $\overline{NO_{x,Tar}}$ noch zur Verfügung stehenden durchschnittlichen $NO_x$-Anteilen der Abgase entsprechen.

In Bezug auf die Fig. 3 wird die Synchronisierdauer gemessen (hier gleich: $t_8 - t_1$) und es wird in Abhängigkeit von der Synchronisierdauer entschieden (unmittelbar nach dem Zeitpunkt ts, ob mehr oder weniger stark angefettet werden soll, es wird also eine gewünschte Luftüberschusszahl $\lambda$ in Abhängigkeit von der Synchronisierdauer festgelegt.

Bezugszeichenliste:

| | |
|---|---|
| 1 | Brennkraftmaschine |
| 2 | Kolben-Zylinder-Einheiten |
| 3 | Motorregeleinrichtung |
| 4 | SCR-Katalysator |
| 5 | Motorblock |
| 6 | Katalysatorregeleinrichtung |
| 7 | Austrittstelle des SCR-Katalysators |
| 8 | elektrischer Generator |
| 9 | Turbolader |
| 10 | Wastegate |
| 11 | Zündeinrichtung |
| 12 | $NO_x$-Sensor |
| 13 | Temperatursensor |
| 14 | Oxidationskatalysator |
| 15 | Injektionsvorrichtung für Reduktionsmittel |
| 16 | Abgasnachbehandlungsvorrichtung |
| 17 | Abgassammelleitung |
| 18 | Ladelufttemperiervorrichtung |
| 19 | erster Betriebspunkt |
| 20 | transienter Betriebspunkt |
| 21 | erste Trajektorie im Verbrennungsschaubild |
| 22 | erste Trajektorie im Verbrennungsschaubild |
| 23 | Energieversorgungsnetz |
| 24 | mechanische Kupplung zwischen Brennkraftmaschine und elektrischem Generator |

| | |
|---|---|
| $t_{av}$ | vorgegebene oder vorgebbare Zeitspanne |
| $t_1, t_2, t_3, ...$ | erster, zweiter, dritter, ... Zeitpunkt |
| $t$ | aktueller Zeitpunkt |
| $t_{Start}$ | Startzeit der Brennkraftmaschine |
| $NO_x(t)$ | Rate des $NO_x$-Anteils (Massenstrom oder Konzentration) zum Zeitpunkt t |

| $\overline{NO_x}$ | $NO_x$-Durchschnittswert |
|---|---|
| $\overline{NO_x}_{,Tar}$ | vorgebbarer oder vorgegebener (konstanter) Zielwert |
| $NO_{x,Ref}(t)$ | zeitabhängiger $NO_x$-Referenzwert (Massenstrom) zum Zeitpunkt t |
| $cumul NO_x$ | kumulierter $NO_x$-Anteil |
| $R_{conv}(t)$ | Konversionsrate der Abgasnachbehandlungsvorrichtung zum Zeitpunkt t |
| $NO_{x,in}(t)$ | in die Abgasnachbehandlungsvorrichtung eintretender Massenstrom zum Zeitpunkt t |
| $NO_{x,out}(t)$ | aus der Abgasnachbehandlungsvorrichtung austretender Massenstrom zum Zeitpunkt t |
| Redux(t) | Massenstrom an Reduktionsmittel zum Zeitpunkt t |

| $\lambda$ | Luftüberschusszahl |
|---|---|
| $\lambda_1$ | erster Wert der Luftüberschusszahl |
| $\lambda_2$ | zweiter Wert der Luftüberschusszahl |
| $P_m$ | mechanische Leistung der Brennkraftmaschine |
| $P_{el}$ | elektrische Leistung der Brennkraftmaschine |
| v | Drehzahl einer Kurbelwelle des Motorblocks |
| T | Temperatur |
| $\theta$ | Kurbelwellenwinkel |

## Patentansprüche

**1.** Brennkraftmaschine (1), mit:

- einem Motorblock (5), mit einer Vielzahl von Kolben-Zylinder-Einheiten (2), in welchen im Betrieb der Brennkraftmaschine (1) ein Luft-Brennstoff-Gemisch unter Entstehung von Abgasen beinhaltend einen $NO_x$-Anteil verbrennbar ist, wobei eine Motorregeleinrichtung (3) zum Regeln des Betriebs des Motorblocks (5) vorgesehen ist,
- einer Abgasnachbehandlungsvorrichtung (16) zum Nachbehandeln des im Betrieb entstehenden Abgases zur Reduktion zumindest des $NO_x$-Anteils, wobei die Abgasnachbehandlungsvorrichtung (16) zumindest einen SCR-Katalysator (4) aufweist, und
- einer Katalysatorregeleinrichtung (6) zum Steuern oder Regeln wenigstens des zumindest einen SCR-Katalysators (4),
wobei der Motorregeleinrichtung (3) ein Zielwert ($\overline{NO_x}_{,Tar}$) für einen sich in Bezug auf eine vorgegebene Zeitspanne ($t_{av}$) an einer Austrittstelle (7) der Abgasnachbehandlungsvorrichtung (16) ergebenden $NO_x$-Durchschnittswert ($\overline{NO_x}$) des $NO_x$-Anteils der Abgase vorgegeben ist, und
wobei die Motorregeleinrichtung (3) zumindest in einem Betriebsmodus dazu konfiguriert ist, die seit dem Beginn ($t_1$) der Zeitspanne ($t_{av}$) bereits emittierten $NO_x$-Anteile der Abgase kumuliert zu berücksichtigen,
**dadurch gekennzeichnet, dass**

- die Motorregeleinrichtung (3) dazu konfiguriert ist, laufend zumindest unter Berücksichtigung der seit Beginn ($t_1$) der Zeitspanne ($t_{av}$) bereits emittierter $NO_x$-Anteile und des vorgegebenen Zielwerts ($NO_{x,Tar}$) einen $NO_x$-Referenzwert ($NO_{x,Ref}(t)$) für die Katalysatorregeleinrichtung (6) zu berechnen, der so gewählt ist, dass sich am Ende der vorgegebenen Zeitspanne ($t_{av}$) an der Austrittstelle der Abgasnachbehandlungsvorrichtung (16) der vorgegebene Zielwert ($NO_{x,Tar}$) ergibt, und
- der berechnete $NO_x$-Referenzwert ($NO_{x,Ref}(t)$) der Katalysatorregeleinrichtung (6) als $NO_x$-Sollwert zugeführt wird.

**2.** Brennkraftmaschine nach Anspruch 1, wobei die Motorregeleinrichtung (3) dazu konfiguriert ist, den $NO_x$-Referenzwert ($NO_{x,Ref}(t)$) für die Katalysatorregeleinrichtung (6) laufend gemäß nachstehender Formel zu berechnen:

$$NO_{x,Ref}(t) = \frac{1}{t_2 - t}\left(t_{av} \cdot \overline{NO_x}_{,Tar} - \int_{t_1}^{t} NO_x(t')dt'\right).$$

**3.** Brennkraftmaschine nach einem der vorangehenden Ansprüche, wobei die Motorregeleinrichtung (3) dazu konfiguriert ist, bei der Regelung des Motorblocks (5) neben einem Zustand des Motorblocks (5) auch einen Zustand der Abgasnachbehandlungsvorrichtung (16) zu berücksichtigen.

4. Brennkraftmaschine nach dem vorangehenden Anspruch, wobei die Motorregeleinrichtung (3) dazu konfiguriert ist, den Zustand der Abgasnachbehandlungsvorrichtung (16) in Form einer aktuellen Konversionsrate ($R_{conv}(t)$) zu berücksichtigen.

5. Brennkraftmaschine nach wenigstens einem der vorangehenden Ansprüche, wobei die Motorregeleinrichtung (3) dazu konfiguriert ist - vorzugsweise nach Ablauf einer Startzeit der Brennkraftmaschine (1) -, einen aktuellen Betriebspunkt des Motorblocks (5) in Abhängigkeit von einer Konversionsrate $R_{conv}(t)$ der Abgasnachbehandlungs-vorrichtung (16) zu steuern und/oder regeln.

6. Brennkraftmaschine nach dem vorangehenden Anspruch, wobei die Motorregeleinrichtung (3) dazu konfiguriert ist, einen aktuellen Betriebspunkt des Motorblocks (5) von einem erstem Betriebspunkt (19) weg zu einem transienten Betriebspunkt (20) mit geringeren $NO_x$-Emissionen zu bewegen, falls der zumindest eine SCR-Katalysator (4) der Abgasnachbehandlungs-vorrichtung (16) weniger $NO_x$-Anteile reduziert, als für das Erreichen des $NO_x$-Referenzwerts ($NO_{x,Ref}(t)$) an der Austrittstelle der Abgasnachbehandlungs-vorrichtung (16) erforderlich ist.

7. Brennkraftmaschine nach wenigstens einem der vorangehenden Ansprüche, wobei die Motorregeleinrichtung (3) dazu konfiguriert ist, eine mechanische Ist-Leistung ($P_{m,ist}$) der Brennkraftmaschine (1) oder eine elektrische Ist-Leistung ($P_{el,ist}$) eines mit der Brennkraftmaschine (1) gekoppelten elektrischen Generators (8) bei der Regelung des Motorblocks (5) und der Katalysatorregel-einrichtung (6) zu berücksichtigen.

8. Brennkraftmaschine nach wenigstens einem der vorangehenden Ansprüche, wobei eine Injektionsvorrichtung (5) zur Injektion von Reduktionsmittel in eine Abgassammelleitung (17) vor einer katalytischen Zone des zumindest einen SCR-Katalysators (4) vorgesehen ist und die Katalysatorregeleinrichtung (6) eine im zumindest einen SCR-Katalysator (4) umgesetzte Menge (Redux) an Reduktionsmittel steuert oder regelt.

9. Brennkraftmaschine nach wenigstens einem der vorangehenden Ansprüche, wobei die Motorregeleinrichtung (3) zur Reduktion des während einer Startzeit von der Brennkraftmaschine (1) emittierten $NO_x$-Anteils der Abgase dazu konfiguriert ist, während der Startzeit der Brennkraftmaschine (1) eine Leistungsrampe für den Motorblock in einem ersten zeitlichen Abschnitt, vorzugsweise nach Erreichen einer Mindestleistung, bis zum Erreichen eines vorgegebenen Grenzwerts für die Leistung mit einer ersten, geringeren Steigung vorzugeben und in einem zweiten zeitlichen Abschnitt bis zum Erreichen einer Nennleistung der Brennkraftmaschine (1) mit einer zweiten, größeren Steigung vorzugeben, wobei vorzugsweise vorgesehen ist, dass die größere Steigung in Abhängigkeit der verbleibenden Zeit bis zum Erreichen der Startzeit berechnet wird.

10. Brennkraftmaschine nach wenigstens einem der vorangehenden Ansprüche, wobei die Motorregeleinrichtung (3) zur Reduktion des während einer Startzeit von der Brennkraftmaschine (1) emittierten $NO_x$-Anteils der Abgase dazu konfiguriert ist, innerhalb der Startzeit der Brennkraftmaschine (1) eine Luftüberschusszahl ($\lambda$) des für die Verbrennung in den Kolben-Zylinder-Einheiten zur Verfügung stehenden Luft-Brennstoff-Gemisches von einem niedrigeren ersten Wert ($\lambda_1$) auf einen höheren zweiten Wert ($\lambda_2$) zu erhöhen.

11. Brennkraftmaschine nach wenigstens einem der vorangehenden Ansprüche, wobei die Motorregeleinrichtung (3) dazu konfiguriert ist, nach Erreichen einer Nennleistung der Brennkraftmaschine (1) für eine vorgebbare oder vorgegebene Zeitspanne

  - einen Ladedruck des Motorblocks (5) zu verringern und/oder
  - einen Zündzeitpunkt der Zündung in den Kolben-Zylinder-Einheiten auf spät zu stellen

12. Brennkraftmaschine nach wenigstens einem der vorangehenden Ansprüche, wobei die vorgebbare oder vorgegebene Zeitspanne ($t_{av}$)

  - mit einem Start der Brennkraftmaschine (1), vorzugsweise mit einer Dauer von 30 Minuten, und/oder
  - zu einem festgelegten Zeitpunkt nach einer Synchronisierung des Gensets mit einem Energieversorgungsnetz oder während der Leistungsrampe der Brennkraftmaschine und/oder
  - nach Erreichen der Nennleistung der Brennkraftmaschine (1) bei Vorliegen einer Laständerung

zu laufen beginnt.

13. Brennkraftmaschine nach wenigstens einem der vorangehenden Ansprüche, wobei die Motorregeleinrichtung (3) dazu konfiguriert ist, einen, insbesondere von der Betriebsart abhängigen, - ggf. zeitabhängigen - vorgegebenen oder vorgebbaren Grenzwert für einen momentanen Massenstrom oder für eine momentane Konzentration der $NO_x$-Anteile der Abgase in einer Abgassammelleitung (17) nicht zu überschreiten.

14. Brennkraftmaschine nach wenigstens einem der vorangehenden Ansprüche, wobei Sensoren vorgesehen sind, über welche die Motorregeleinrichtung (3) Informationen über den Zustand des Motorblocks (5) und den Zustand der Abgasnachbehandlungsvorrichtung (16) erhalten oder bestimmen kann, vorzugsweise zumindest ein $NO_x$-Sensor (12) und/oder ein Temperatursensor (13).

15. Brennkraftmaschine nach wenigstens einem der vorangehenden Ansprüche, wobei die Motorregeleinrichtung (3) dazu konfiguriert ist, eine Anpassung von Umsätzen und/oder der $NO_x$-Anteile des Abgases vorzunehmen um eine Optimierung des Reduktionsmittels und/oder eines Gesamtbetriebsmittelverbrauchs, vorzugsweise Harnstoff und Treibgas, zu erzielen.

16. Brennkraftmaschine nach wenigstens einem der vorangehenden Ansprüche, wobei die Motorregeleinrichtung (3) dazu konfiguriert ist, zur Regelung der $NO_x$-Emissionen einen Ladedruck des Motorblocks (5) so anzusteuern, sodass sich eine gewünschte Luftüberschusszahl ($\lambda$) ergibt.

17. Brennkraftmaschine nach wenigstens einem der vorangehenden Ansprüche, wobei die Motorregeleinrichtung (3) dazu konfiguriert ist, bei der Wahl einer gewünschten Luftüberschusszahl ($\lambda$) eine Synchronisierdauer eines die Brennkraftmaschine (1) beinhaltenden Gensets mit einem Energieversorgungsnetz zu berücksichtigen.

18. Brennkraftmaschine nach wenigstens einem der vorangehenden Ansprüche, wobei die Abgasnachbehandlungsvorrichtung zumindest einen Oxidationskatalysator (14) aufweist, welcher bevorzugt strömungstechnisch dem zumindest einen SCR-Katalysator (4) vor- oder nachgeschaltet ist.

19. Brennkraftmaschine nach wenigstens einem der vorangehenden Ansprüche, wobei die Motorregeleinrichtung (3) und die Katalysatorregeleinrichtung (6) in einer gemeinsamen Regelvorrichtung ausgebildet sind.

20. Genset, mit einer Brennkraftmaschine (1) nach wenigstens einem der vorangehenden Ansprüche und einem mittels einer mechanischen Kupplung (24) mit der Brennkraftmaschine (1) gekoppelten oder koppelbaren elektrischen Generator (8).

**Claims**

1. An internal combustion engine (1) comprising:

   - an engine block (5) having a plurality of piston-cylinder units (2) in which in operation of the internal combustion engine (1) an air-fuel mixture is combustable with the production of exhaust gases containing an $NO_x$ portion, wherein there is provided an engine closed-loop control unit (3) for controlling operation of the engine block (5), and
   - an exhaust gas aftertreatment apparatus (16) for aftertreatment of the exhaust gas occurring in operation for reduction at least of the $NO_x$ portion, wherein the exhaust gas aftertreatment apparatus (16) has at least one SCR catalytic converter (4), and
   - a catalytic converter closed-loop control device (6) for open-loop or closed-loop control at least of the at least one SCR catalytic converter (4),
   wherein the engine closed-loop control unit (3) is given a target value ($\overline{NO_x}_{,\ Tar}$) for an $NO_x$ average value ($\overline{NO_x}$) of the $NO_x$ portion of the exhaust gases, that occur in relation to a predetermined period of time ($t_{av}$) at a discharge (7) from the exhaust gas aftertreatment apparatus (16), and
   wherein the engine closed-loop control unit (3) is configured at least in one operating mode to take account in cumulated form of already emitted $NO_x$ portions of the exhaust gas since the beginning ($t_1$) of the period of time ($t_{av}$),
   **characterized in that**

   - the engine closed-loop control unit (3) is configured to continuously calculate an $NO_x$ reference value ($NO_{x,Ref}(t)$) for the catalytic converter closed-loop control device (6) having regard to already emitted $NO_x$

portions and the predetermined target value ($\overline{NO_{x,Tar}}$), which reference value is so selected that at the end of the predetermined period of time ($t_{av}$) the predetermined target value ($\overline{NO_{x,Tar}}$) results at the discharge of the exhaust gas aftertreatment apparatus (16), and
- the calculated $NO_x$ reference value ($NO_{x,Ref}(t)$) is fed to the catalytic converter closed-loop control device (6) as an $NO_x$ setpoint value.

2. The internal combustion engine as set forth in claim 1, wherein the engine closed-loop control unit (3) is configured to calculate the $NO_x$ reference value ($NO_{x,Ref}(t)$) for the catalytic converter closed-loop control device (6) continuously in accordance with the following formula:

$$NO_{x,Ref}(t) = \frac{1}{t_2 - t}\left(t_{av} \cdot \bar{N}\bar{O}_{x,Tar} - \int_{t_1}^{t} NO_x(t')dt'\right)$$

3. The internal combustion engine as set forth in one of the preceding claims, wherein the engine closed-loop control unit (3) is configured upon control of the engine block (5) besides a state of the engine block (5) also to take account of a state of the exhaust gas aftertreatment apparatus (16).

4. The internal combustion engine as set forth in the preceding claim, wherein the engine closed-loop control unit (3) is configured to take account of the state of the exhaust gas aftertreatment apparatus (16) in the form of a current conversion rate ($R_{conv}(t)$).

5. The internal combustion engine as set forth in at least one of the preceding claims, wherein the engine closed-loop control unit (3) is configured - preferably after the expiry of a starting time of the internal combustion engine (1) - to provide for open-loop and/or closed-loop control of a current operating point of the engine block (5) in dependence on a conversion rate ($R_{conv}(t)$) of the exhaust gas aftertreatment apparatus (16).

6. The internal combustion engine as set forth in the preceding claim, wherein the engine closed-loop control unit (3) is configured to move a current operating point of the engine block (5) away from a first operating point (19) to a transient operating point (20) with lower $NO_x$ emissions if the at least one SCR catalytic converter (4) of the exhaust gas aftertreatment apparatus (16) reduces fewer $NO_x$ portions than is required to attain the $NO_x$ reference value ($NO_{x,Ref}(t)$) at the discharge of the exhaust gas aftertreatment apparatus (16) .

7. The internal combustion engine as set forth in at least one of the preceding claims, wherein the engine closed-loop control unit (3) is configured to take account of a mechanical actual power output ($P_{m,ist}$) of the internal combustion engine (1) or an electrical actual power output ($P_{el,ist}$) of an electrical generator (8) coupled to the internal combustion engine (1) in control of the engine block (5) and the catalytic converter closed-loop control device (6).

8. The internal combustion engine as set forth in at least one of the preceding claims, wherein there is provided an injection device (5) for the injection of reducing agent into an exhaust gas manifold (17) before a catalytic zone of the at least one SCR catalytic converter (4) and the catalytic converter closed-loop control device (6) provides for open-loop or closed-loop control of an amount (Redux) of reducing agent converted in at least one SCR catalytic converter (4).

9. The internal combustion engine as set forth in at least one of the preceding claims, wherein the engine closed-loop control unit (3) for reduction of the exhaust gas $NO_x$ portion emitted during a starting time of the internal combustion engine (1) is configured during the starting time of the internal combustion engine (1) to predetermine a power ramp for the engine block in a first time portion, preferably after attainment of the minimum power output, until reaching a predetermined limit value for the power output with a first lesser gradient and in a second time portion until reaching a nominal power output of the internal combustion engine (1) with a second greater gradient, wherein it is preferably provided that the greater gradient is calculated in dependence on the remaining time until the starting time is reached.

10. The internal combustion engine as set forth in at least one of the preceding claims, wherein the engine closed-loop control unit (3) for reduction of the exhaust gas $NO_x$ portion emitted during a starting time of the internal combustion engine (1) is configured within the starting time of the internal combustion engine (1) to increase an air excess number ($\lambda$) of the air-fuel mixture available for combustion in the piston-cylinder units from a lower first value ($\lambda_1$) to a higher second value ($\lambda_2$).

11. The internal combustion engine as set forth in at least one of the preceding claims, wherein the engine closed-loop control unit (3) is configured, after the attainment of a nominal power output of the internal combustion engine (1) for a predeterminable or predetermined period of time:

- to reduce a charging pressure of the engine block (5), and/or
- to set an ignition time of ignition in the piston-cylinder units to late.

12. The internal combustion engine as set forth in at least one of the preceding claims, wherein the predeterminable or predetermined period of time ($t_{av}$) begins to run:

- with a start of the internal combustion engine (1), preferably with a duration of 30 minutes, and/or
- at an established moment in time after synchronization of the genset with a power supply grid or during the power output ramp of the internal combustion engine, and/or
- after attainment of the nominal power output of the internal combustion engine (1) when there is a change in load.

13. The internal combustion engine as set forth in at least one of the preceding claims, wherein the engine closed-loop control unit (3) is configured not to exceed a predetermined or predeterminable limit value which is in particular dependent on the mode of operation - possibly time-dependent - for a momentary mass flow or for a momentary concentration of the $NO_x$ proportions or components of the exhaust gases in an exhaust manifold (17).

14. The internal combustion engine as set forth in at least one of the preceding claims, wherein there are provided sensors, by way of which the engine closed-loop control unit (3) can acquire or determine information about the state of the engine block (5) and the state of the exhaust gas aftertreatment apparatus (16), preferably at least one $NO_x$ sensor (12) and/or one temperature sensor (13).

15. The internal combustion engine as set forth in at least one of the preceding claims, wherein the engine closed-loop control unit (3) is configured to effect adaptation of conversions and/or the $NO_x$ portions in the exhaust gas to achieve optimization of the reducing agent and/or a total operating resources consumption, preferably urea and propellant gas.

16. The internal combustion engine as set forth in at least one of the preceding claims, wherein the engine closed-loop control unit (3) is configured for controlling the $NO_x$ emissions to control a charging pressure of the engine block (5) so as to give a desired air excess number ($\lambda$).

17. The internal combustion engine as set forth in at least one of the preceding claims, wherein the engine closed-loop control unit (3) is configured in the selection of a desired air excess number ($\lambda$) to take account of a synchronization duration of a genset including the internal combustion engine (1) with a power supply grid.

18. The internal combustion engine as set forth in at least one of the preceding claims, wherein the exhaust gas aftertreatment apparatus has at least one oxidation catalytic converter (14) which is preferably connected fluidically upstream or downstream of the at least one SCR catalytic converter (4).

19. The internal combustion engine as set forth in at least one of the preceding claims, wherein the engine closed-loop control unit (3) and the catalytic converter closed-loop control device (6) are provided in a common control apparatus.

20. A genset comprising an internal combustion engine (1) as set forth in at least one of the preceding claims and an electric generator (8) which is or can be coupled to the internal combustion engine (1) by means of a mechanical coupling (24).

**Revendications**

1. Moteur à combustion interne (1) avec :

- un bloc moteur (5), avec une pluralité d'unités à pistons et cylindres (2), dans lesquelles en fonctionnement du moteur à combustion interne (1), un mélange air-carburant peut être brûlé en dégageant des gaz d'échappement contenant une fraction de $NO_x$, dans lequel un dispositif de réglage de moteur (3) est prévu pour le réglage du fonctionnement du bloc moteur (5),

- un dispositif de post-traitement de gaz d'échappement (16) pour le post-traitement des gaz d'échappement dégagés en fonctionnement pour la réduction au moins de la fraction de $NO_x$, dans lequel le dispositif de post-traitement de gaz d'échappement (16) présente au moins un catalyseur SCR (4), et

- un dispositif de réglage de catalyseur (6) pour la commande ou le réglage au moins d'au moins un catalyseur SCR (4),

dans lequel au dispositif de réglage de moteur (3) est spécifiée une valeur cible ($\overline{NO}_{x,Tar}$) pour une valeur moyenne de $NO_x$ ($\overline{NO}_x$) obtenue par rapport à un intervalle ($t_{av}$) prédéfini en un point de sortie (7) du dispositif de post-traitement de gaz d'échappement (16) de la fraction de $NO_x$ des gaz d'échappement, et

dans lequel le dispositif de réglage de moteur (3) est configuré au moins dans un mode de fonctionnement afin de prendre en compte de manière cumulée les fractions de $NO_x$ des gaz d'échappement déjà émises depuis le début ($t_1$) de l'intervalle ($t_{av}$),

**caractérisé en ce que**

- le dispositif de réglage de moteur (3) est configuré afin de calculer en permanence au moins en prenant compte les fractions de $NO_x$ déjà émises depuis le début ($t_1$) de l'intervalle ($t_{av}$) et la valeur cible ($\overline{NO}_{x,Tar}$) prédéfinie une valeur de référence de $NO_x$ ($NO_{x,Ref}(t)$) pour le dispositif de réglage de catalyseur (6) qui est choisie de sorte à obtenir à la fin de l'intervalle prédéfini ($t_{av}$) au point de sortie du dispositif de post-traitement de gaz d'échappement (16) la valeur cible ($\overline{NO}_{x,Tar}$) prédéfinie, et

- la valeur de référence de $NO_x$ ($NO_{x,Ref}(t)$) calculée est fournie au système de réglage de catalyseur (6) comme valeur de consigne de $NO_x$.

2. Moteur à combustion interne selon la revendication 1, dans lequel le dispositif de réglage de moteur (3) est configuré afin de calculer la valeur de référence de $NO_x$ ($NO_{x,Ref}(t)$) pour le système de réglage de catalyseur (6) en permanence selon la formule ci-après :

$$NO_{x,Ref}(t) = \frac{1}{t_2-t}\left(t_{av}\cdot\overline{NO}_{x,Tar} - \int_{t1}^{t} NO_x(t')dt'\right).$$

3. Moteur à combustion interne selon l'une quelconque des revendications précédentes, dans lequel le dispositif de réglage de moteur (3) est configuré afin de prendre en compte aussi lors du réglage du bloc moteur (5), outre un état du bloc moteur (5), un état du dispositif de post-traitement de gaz d'échappement (16).

4. Moteur à combustion interne selon la revendication précédente, dans lequel le dispositif de réglage de moteur (3) est configuré afin de prendre en compte l'état du dispositif de post-traitement de gaz d'échappement (16) sous la forme d'un taux de conversion actuel ($R_{conv}(t)$).

5. Moteur à combustion interne selon au moins l'une quelconque des revendications précédentes, dans lequel le dispositif de réglage de moteur (3) est configuré afin de commander et/ou de réguler - de préférence après expiration d'un temps de démarrage du moteur à combustion interne (1) - un point de fonctionnement actuel du bloc moteur (5) en fonction d'un taux de conversion $R_{conv}(t)$ du dispositif de post-traitement de gaz d'échappement (16).

6. Moteur à combustion interne selon la revendication précédente, dans lequel le dispositif de réglage de moteur (3) est configuré afin de déplacer un point de fonctionnement actuel du bloc moteur (5) d'un premier point de fonctionnement (19) à un point de fonctionnement (20) transitoire avec de plus faibles émissions de $NO_x$ au cas où l'au moins un catalyseur SCR (4) du dispositif de post-traitement de gaz d'échappement (16) réduit moins de fractions de $NO_x$ qu'il n'est requis pour l'obtention de la valeur de référence de $NO_x$ ($NO_{x,Ref}(t)$) au point de sortie du dispositif de post-traitement de gaz d'échappement (16).

7. Moteur à combustion interne selon au moins l'une quelconque des revendications précédentes, dans lequel le dispositif de réglage de moteur (3) est configuré afin de prendre en compte une puissance réelle mécanique ($P_{m,ist}$) du moteur à combustion interne (1) ou une puissance réelle électrique ($P_{el,ist}$) d'un générateur (8) électrique couplé au moteur à combustion interne (1) lors du réglage du bloc moteur (5) et du dispositif de réglage de catalyseur (6).

8. Moteur à combustion interne selon au moins l'une quelconque des revendications précédentes, dans lequel un dispositif d'injection (5) pour l'injection d'agent de réduction dans une conduite de collecte de gaz d'échappement (17) est prévu avant une zone catalytique d'au moins un catalyseur SCR (4) et le dispositif de réglage de catalyseur (6) commande ou règle une quantité (Redux) d'agent de réduction transférée dans au moins un catalyseur SCR (4).

9. Moteur à combustion interne selon au moins l'une quelconque des revendications précédentes, dans lequel le dispositif de réglage de moteur (3) est configuré pour la réduction de la fraction de $NO_x$ émise pendant un temps de démarrage du moteur à combustion interne (1) afin de prédéfinir pendant le temps de démarrage du moteur à combustion interne (1) une rampe de puissance pour le bloc moteur dans une première section temporelle, de préférence après l'obtention d'une puissance minimale, jusqu'à l'atteinte d'une valeur limite prédéfinie pour la puissance avec une première pente plus faible et de prédéfinir dans une deuxième section temporelle jusqu'à l'obtention d'une puissance nominale du moteur à combustion interne (1) avec une deuxième pente plus grande, dans lequel il est de préférence prévu que la pente plus grande soit calculée en fonction du temps restant jusqu'à l'obtention du temps de démarrage.

10. Moteur à combustion interne selon au moins l'une quelconque des revendications précédentes, dans lequel le dispositif de réglage de moteur (3) est configuré pour la réduction de la fraction de $NO_x$ de gaz d'échappement émise pendant un temps de démarrage du moteur à combustion interne (1) afin d'augmenter dans le temps de démarrage du moteur à combustion interne (1) un coefficient d'excédent d'air ($\lambda$) du mélange air-carburant se trouvant à disposition pour la combustion dans les unités à pistons et cylindres d'une première valeur plus faible ($\lambda1$) à une deuxième valeur plus élevée ($\lambda2$).

11. Moteur à combustion interne selon au moins l'une quelconque des revendications précédentes, dans lequel le dispositif de réglage de moteur (3) est configuré après l'obtention d'une puissance nominale du moteur à combustion interne (1) pour un intervalle prédéfinissable ou prédéfini afin de

- diminuer une pression de charge du bloc moteur (5) et/ou
- de retarder un moment de l'allumage dans les unités à pistons et cylindres.

12. Moteur à combustion interne selon au moins l'une quelconque des revendications précédentes, dans lequel l'intervalle ($t_{av}$) prédéfinissable ou prédéfini commence à s'écouler

- avec un démarrage du moteur à combustion interne (1), de préférence avec une durée de 30 minutes et/ou
- à un moment déterminé après une synchronisation du groupe électrogène avec un réseau d'alimentation en énergie ou pendant la rampe de puissance du moteur à combustion interne et/ou
- après l'obtention de la puissance nominale du moteur à combustion interne (1) en présence d'une modification de charge.

13. Moteur à combustion interne selon au moins l'une quelconque des revendications précédentes, dans lequel le dispositif de réglage de moteur (3) est configuré afin de ne pas dépasser une valeur limite prédéfinie ou prédéfinissable - éventuellement en fonction du temps -, dépendant en particulier du type de fonctionnement pour un courant de masse momentané ou pour une concentration momentanée des fractions de $NO_x$ des gaz d'échappement dans une conduite de collecte de gaz d'échappement (17).

14. Moteur à combustion interne selon au moins l'une quelconque des revendications précédentes, dans lequel des capteurs sont prévus, par le biais desquels le dispositif de réglage de moteur (3) peut obtenir ou déterminer des informations sur l'état du bloc moteur (5) et l'état du dispositif de post-traitement de gaz d'échappement (16), de préférence au moins un capteur de $NO_x$ (12) et/ou un capteur de température (13).

15. Moteur à combustion interne selon au moins l'une quelconque des revendications précédentes, dans lequel le dispositif de réglage de moteur (3) est configuré afin d'entreprendre une adaptation de conversions et/ou de fractions de $NO_x$ des gaz d'échappement pour obtenir une optimisation de l'agent de réduction et/ou d'une consommation des ressources globale, de préférence de l'urée et du gaz propulseur.

16. Moteur à combustion interne selon au moins l'une quelconque des revendications précédentes, dans lequel le dispositif de réglage de moteur (3) est configuré afin de commander pour la régulation des émissions de $NO_x$ une pression de charge du bloc moteur (5) de sorte à obtenir un coefficient d'excédent d'air (X) souhaité.

17. Moteur à combustion interne selon au moins l'une quelconque des revendications précédentes, dans lequel le dispositif de réglage de moteur (3) est configuré afin de prendre en compte lors du choix d'un coefficient d'excédent d'air (X) souhaité une durée de synchronisation d'un groupe électrogène contenant le moteur à combustion interne (1) avec un réseau d'alimentation en énergie.

18. Moteur à combustion interne selon au moins l'une quelconque des revendications précédentes, dans lequel le dispositif de post-traitement de gaz d'échappement présente au moins un catalyseur d'oxydation (14) qui est monté en amont ou en aval de préférence en écoulement de l'au moins un catalyseur SCR (4).

19. Moteur à combustion interne selon au moins l'une quelconque des revendications précédentes, dans lequel le dispositif de réglage de moteur (3) et le dispositif de réglage de catalyseur (6) sont réalisés dans un dispositif de réglage commun.

20. Groupe électrogène avec un moteur à combustion interne (1) selon au moins l'une quelconque des revendications précédentes et un générateur (8) électrique couplé ou pouvant être couplé au moyen d'un couplage mécanique (24) au moteur à combustion interne (1).

EP 3 899 231 B1

# Fig. 1

22

# Fig. 2

# Fig. 3

# Fig. 4

# Fig. 5

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 3062162 A1
- EP 0259382 B1